# EUROPEAN PATENT APPLICATION

(11) **EP 3 002 667 A2**
(43) Date of publication of application: **06.04.2016**
(21) Application number: 15002106.1
(22) Date of filing: 15.07.2015
(51) Int. Cl.: G06F 3/0484, G06F 3/0485, G06F 3/0488, H04M 1/725

(54) **MOBILE TERMINAL AND CONTROL METHOD THEREOF**

(30) Priority: 01.10.2014 KR 20140132558
(71) Applicant: LG Electronics Inc., Yeongdeungpo-gu Seoul 150-721 (KR)
(72) Inventor: KIM, Mina, Seoul 137-893 (KR); LEE, Junho, Seoul 137-893 (KR)
(74) Representative: Beyer, Andreas

(57) **Abstract**

A mobile terminal including a touch screen configured to display a first image; and a controller configured to display a second image magnifying a portion corresponding to a touch-selected region of the first image while continuing to display the first image.

## Description

### BACKGROUND OF THE INVENTION

### 1. Field of the Invention

The present disclosure relates to a mobile terminal capable of outputting screen information.

### 2. Background of the Invention

Terminals may be generally classified as mobile/portable terminals or stationary terminals. Mobile terminals may also be classified as handheld terminals or vehicle mounted terminals. As functions of the terminal become more diversified, the terminal can support more complicated functions such as capturing images or video, reproducing music or video files, playing games, receiving broadcast signals, and the like. By comprehensively and collectively implementing such functions, the mobile terminal may be embodied in the form of a multimedia player or a device.

Various attempts have been made to implement complicated functions in such a multimedia device by means of hardware or software. For example, a user interface environment allowing users to easily and conveniently search for and select functions is provided. Also, recently, as various types of screen information have been provided through mobile terminal, the necessity for various UX/UIs has increased.

### SUMMARY OF THE INVENTION

Accordingly, an aspect of the present invention is to address the above-noted and other problems.

Another aspect of the present invention is to provide a mobile terminal capable of providing a graphic user interface (GUI) optimized for a capture function, and a control method thereof.

Another aspect of the present invention is to provide a mobile terminal capable of providing a GUI optimized for image output, and a control method thereof.

Another aspect of the present invention is to provide a mobile terminal capable of providing a GUI optimized for an image editing function, and a control method thereof.

To achieve these and other advantages and in accordance with the purpose of this specification, as embodied and broadly described herein, a mobile terminal may include: a display unit configured to output a first image; and a controller configured to control the display unit to display a second image magnifying a portion corresponding to one region when the one region of the output first image is selected, wherein the controller outputs the second image when outputting of the first image is maintained.

In an embodiment of the present disclosure, the first image may be output to a partial region of an output region of the display unit, and the second image may be output to a region excluding the partial region of the output region of the display unit.

In an embodiment of the present disclosure, when the one region of the first image is selected, the controller may move the first image to increase the remaining region in which the second image is output.

In an embodiment of the present disclosure, an indicator for guiding the portion corresponding to the one region may overlap on the first image.

In an embodiment of the present disclosure, when a drag touch is applied to the second image, the controller may change the second image to a third image magnifying a portion corresponding to a region different from the one region.

In an embodiment of the present disclosure, when the second image is changed to the third image, the indicator may be displayed to correspond to the different region of the first image.

In an embodiment of the present disclosure, the controller may change a size of the one region based on a preset type of touch applied to the second image, the indicator may be displayed to correspond to the one region having a changed size, and the second image may be changed to an image magnifying a portion of the first image corresponding to the one region having the changed size.

In an embodiment of the present disclosure, the controller may display the first and second images in an overlapping manner.

In an embodiment of the present disclosure, the controller may adjust transparency of at least one of the first and second images such that at least one of the first and second images is recognizable in a portion in which the first and second images overlap with each other.

In an embodiment of the present disclosure, when a touch is applied to any one of the first and second images, the controller may output an image corresponding to the overlapping portion in the image to which the touch has been applied in the overlapping portion, and limit outputting of the image corresponding to the overlapping portion in the image other than the image to which the touch has been applied.

In an embodiment of the present disclosure, the preset type of touch may be at least two drag touches applied at different times.

In an embodiment of the present disclosure, when a first drag touch is applied to the second image and a second drag touch different from the first drag touch is applied to a portion different from a portion to which the first drag touch has been applied, the controller may limit outputting of an image between the portions to which the first and second drag touches have been applied, among the first images.

In an embodiment of the present disclosure, an icon for guiding that an image limited in output thereof exists in the first image having the changed output form is output, and the controller may output the output-limited image based on a touch applied to the icon.

In an embodiment of the present disclosure, among first and second drag touches applied in mutually perpendicular directions, when the second drag touch is applied to the second image after the first drag touch is applied to the second image, the controller limits outputting of at least a portion of the first image.

In an embodiment of the present disclosure, when a first touch is applied to the second image and a second touch is applied to the third image, when at least one drag touch extending from at least one of the first and second touches is applied to form a pinch-in touch, the controller may generate a new image including the second and third images.

To achieve these and other advantages and in accordance with the purpose of this specification, as embodied and broadly described herein, a method for controlling a mobile terminal may include: outputting a first image on a display unit; and when one region of the output first image is selected, controlling the display unit to display a second image magnifying a portion corresponding to the one region, wherein the controlling may include outputting the second image when outputting of the first image is maintained.

In an embodiment of the present disclosure, the first image may be output to a partial region of an output region of the display unit, and the second image may be output to a remaining region excluding the partial region in the output region of the display unit.

In an embodiment of the present disclosure, the controlling may include: when the one region of the first image is selected, moving the first image to increase the remaining region in which the second image is output.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate embodiments and together with the description serve to explain the principles of the invention.

In the drawings:
FIG. 1A is a block diagram of a mobile terminal of an embodiment of the present disclosure.
FIGS. 1B and 1C are conceptual views of one example of the mobile terminal, viewed from different directions.
FIG. 2 is a flow chart illustrating a control method of an embodiment of the present disclosure.
FIGS. 3(a) to 3(c) are conceptual views illustrating the control method of FIG. 2.
FIGS. 4A(a) to 4C(d) are conceptual views illustrating a capture method to generate a first image according to an embodiment of the present disclosure.
FIGS. 5A(a) to 7(d) are conceptual views illustrating a method for outputting an image according to an embodiment of the present disclosure.
FIGS. 8A(a) to 8C(c) are conceptual views illustrating a method for changing an output format of a first image such that outputting of at least a portion of the first image is limited by using a second image magnifying a portion corresponding to one region of the first image.
FIGS. 9A(a) to 9C(d) are conceptual views illustrating a method for generating a new image by using a second image magnifying a portion corresponding to one region of the first image and a third image magnifying a portion corresponding to a region different from the one region.
FIGS. 10A(a) to 10D are conceptual views illustrating a method for transmitting a first image.

### DETAILED DESCRIPTION OF THE INVENTION

Description will now be given in detail according to embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

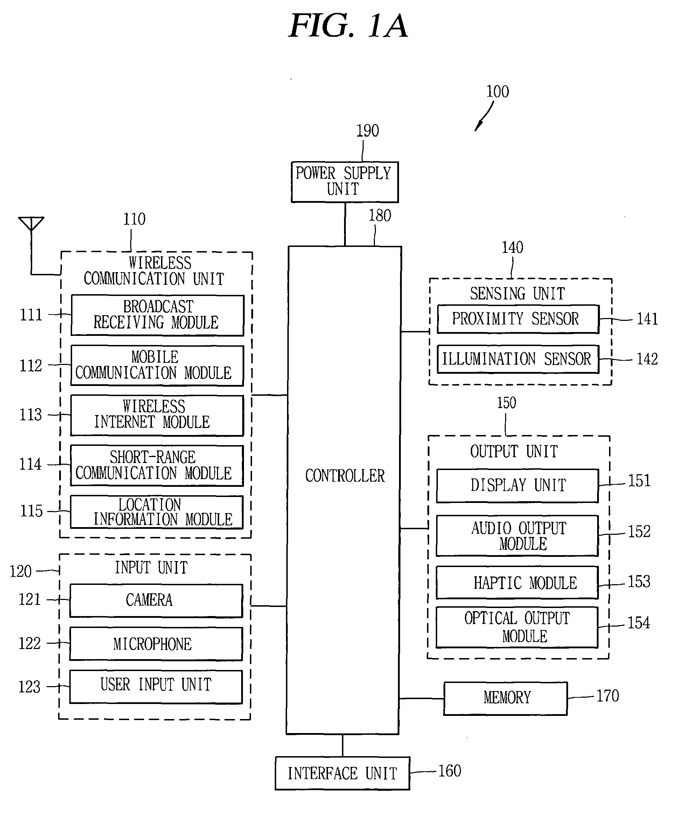

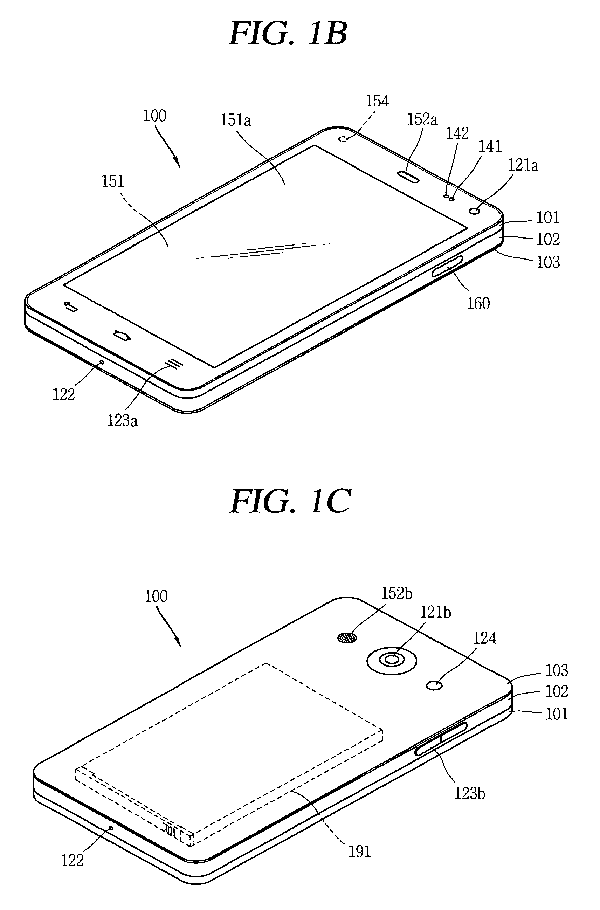

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions. The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server.

Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least some of the above components may operate in a cooperating manner, so as to implement an operation or a control method of a glass type terminal according to various embodiments to be explained later. The operation or the control method of the glass type terminal may be implemented on the glass type terminal by driving at least one application program stored in the memory 170.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies. Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH^{™}, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like). In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like. The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like. A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen. The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging. The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101. In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like. As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may include the display unit 151, the first audio output module 152a, the second audio output module 152b, the proximity sensor 141, the illumination sensor 142, the optical output module 154, the first camera 121a, the second camera 121b, the first manipulation unit 123a, the second manipulation unit 123b, the microphone 122, the interface unit 160, etc.

Hereinafter, the mobile terminal 100 will be explained with reference to FIGS. 1B and 1B. The display unit 151, the first audio output module 152a, the proximity sensor 141, the illumination sensor 142, the optical output module 154, the first camera 121a and the first manipulation unit 123a are arranged on the front surface of the terminal body. The second manipulation unit 123b, the microphone 122 and the interface unit 160 are arranged on the side surfaces of the terminal body. The second audio output module 152b and the second camera 121b are arranged on the rear surface of the terminal body.

However, alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. For example, the display unit 151 may display information on an execution screen of an application program driven in the mobile terminal 100, or a User Interface (UI) or a Graphic User Interface (GUI) associated with such execution screen information. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output unit 152a may be implemented as a receiver for transmitting a call sound to a user's ears, and the second audio output unit 152b may be implemented as a loud speaker for outputting each type of alarm sounds or a play sound of multimedia.

It may be configured such that the sounds generated from the first audio output module 152a are released along an assembly gap between the structural bodies (e.g., between the window 151a and the front case 101). In this instance, a hole independently formed to output audio sounds may not be seen or hidden in terms of appearance, thereby further simplifying the appearance of the mobile terminal 100.

The optical output module 154 can output a signal for indicating an event generation using light of a light source. Examples of events generated in the mobile terminal 100 may include message reception, call signal reception, a missed call, an alarm, a schedule notice, an email reception, information reception through an application, and the like. A signal output by the optical output module 154 may be implemented so the mobile terminal emits monochromatic light or light with a plurality of colors. The signal output may be terminated as the mobile terminal senses that a user has checked the generated event, for example.

The first camera 121a processes image data of still pictures or video acquired by an image capture device in a video capturing mode or an image capturing mode. The processed image frames may be displayed on the display unit 151, or may be stored in the memory 170. The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may be implemented in a user's non-tactile manner, e.g., by a proximity touch, a hovering touch, etc.

FIG. 1B illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen. As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 (refer to FIG. 1A) may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

The mobile terminal 100 that may include one or more of the components as described above according to an embodiment of the present disclosure may display screen information on the display unit 151. Here, the screen information may be various types of information available to be output on the display unit 151 of the mobile terminal 100. For example, the screen information may be visual information included in a menu screen, a lock screen, a home screen, an image, a video, an electronic document, a page, a list, and the like.

The electronic document may include a digital image, a word processing, a spreadsheet, a presentation document, and the like. The page may include a web page, an execution screen of an application, and the like. Also, the list may include selectable items, which may also be referred to as a table of contents, a catalog, and the like. The list may include a message list, an e-mail list, and the like.

Types of screen information output on the display unit 151 may be determined based on a user selection or may be determined under the control of the controller 180. For example, the screen information may be output based on selection of an icon of an application (or when the icon of the application is touched). When an icon of an image related application is selected, the controller 180 can output an execution screen of the image related application or at least one image stored in the memory 170 to the display unit 151.

Hereinafter, a method for controlling screen information output on a portion of the display unit 151 according to an embodiment of the present disclosure will be described in detail with reference to the accompanying drawings. Also, hereinafter, an image as an embodiment of screen information is output on the display unit 151 will be described as an example. Hereinafter, however, contents regarding images described above may also be inferred and applied in the same or similar manner to when at least one of the screen information mentioned above is output on a portion of the display unit 151.

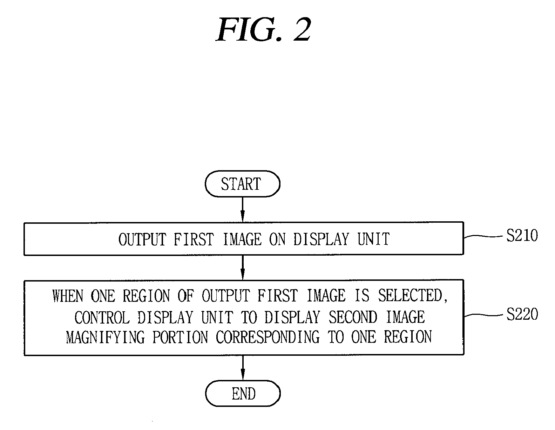

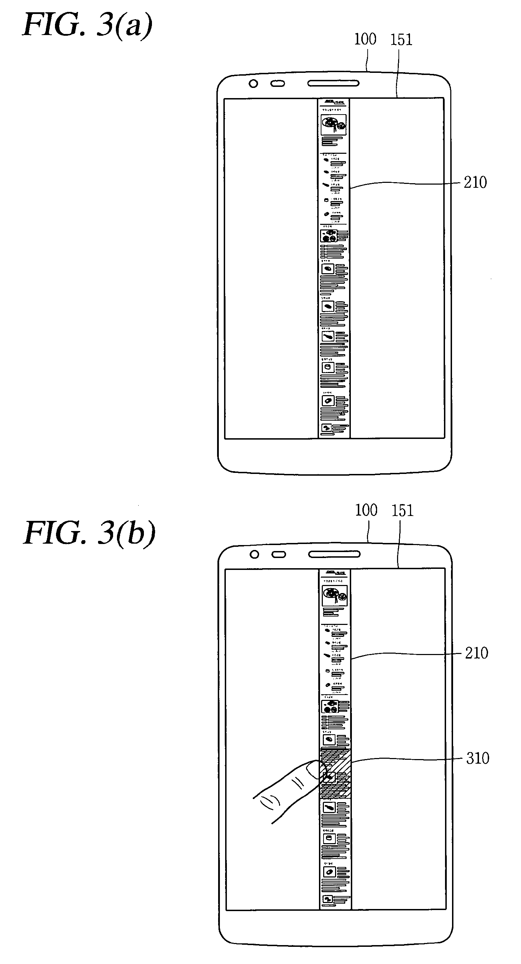

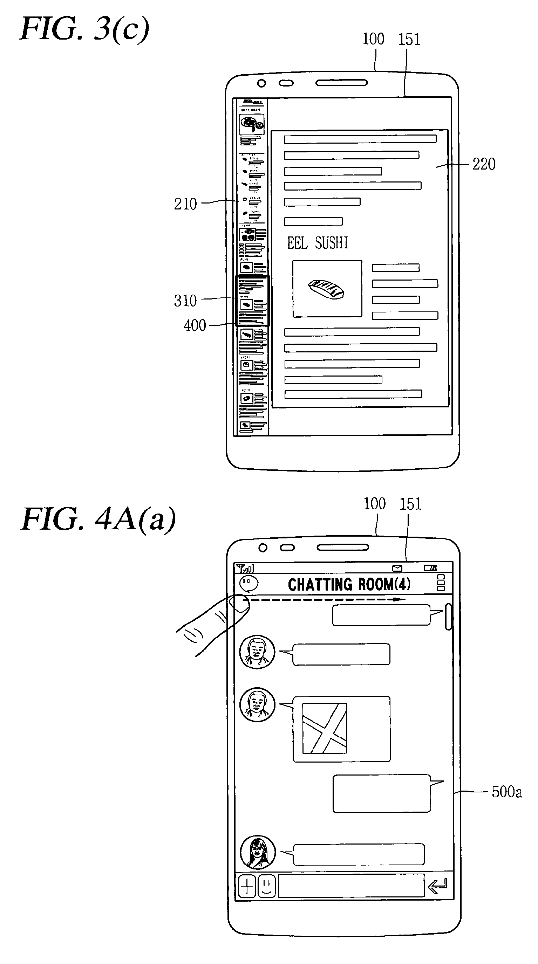

FIG. 2 is a flow chart illustrating a control method of an embodiment of the present disclosure, and FIG. 3 is a conceptual view illustrating the control method of FIG. 2. First, in an embodiment of the present disclosure, an image is output on the display unit 151 (S210). The image may be the image stored in the memory 170, as an embodiment of screen information described above. The image may be output on the display unit 151 based on an execution of an image related application. For example, when an icon of an application for outputting an image stored in the memory 170 is selected, the controller 180 can output an execution screen of the application for outputting the image on the display unit 151.

A thumbnail of the image stored in the memory 170 or the image itself stored in the memory 170 may be output on the execution screen of the application. If a thumbnail of the image is displayed on the execution screen of the application, the controller 180 can output the image itself corresponding to the thumbnail on the display unit 151 based on selection of the thumbnail.

The image may be output to correspond to a size of an output region of the display unit 151. In more detail, when the size of the image is greater than the size of the output region of the display unit 151, the controller 180 can reduce the size of the image such that the entire image can be output to the output region of the display unit 151, and output the reduced image.

Conversely, when a size of an image is smaller than that of the output region of the display unit 151, the controller 180 can output the image to a portion of the display unit 151 or may increase the size of the image to correspond to the size of the output region of the display unit 151, and output the increased image. Meanwhile, an image may be output to a partial region of the output region of the display unit 151. In more detail, the controller 180 can output an image to only a partial region, rather than to the entire output region of the display unit 151. Hereinafter, an image output to a partial region of the output region of the display unit 151 will be defined as a "first image 210."

Also, the first image 210 may be an image having a ratio of a length and a width different from a ratio of a length and a width of the display unit 151. The ratio may be defined as a width against a length (width/length) or a length against a width (length/width). Also, the entirety of the first image 210 may be output on the display unit 151. In more detail, when the ratio between the length and width of the first image 210 is different from the ratio between the length and the width of the display unit 151, the first image 210 may be output on a partial region of the output region of the display unit 151. That is, since the entirety of the first image 210 having a ratio different from the ratio between the length and the width of the display unit 151 is output, the entirety of the first image 210 is output on a partial region of the display unit 151.

The first image 210 may be generated according to various methods. In more detail, the first image 210 may be any image as long as it has a ratio different from the ratio between the length and the width of the display unit 151. For example, the first image 210 may be an image captured through a panorama image capture function, an image which is captured when the mobile terminal 100 is in a landscape orientation and which is subsequently output when the mobile terminal 100 is in a portrait orientation, and the like.

Also, the controller 180 can generate the first image 210 by using a capture function. Here, the capture function performed in the mobile terminal 100 refers to putting (or holding) a screen being output on the display unit 151 as is, as an image format, in a memory. Here, the image may include both a static image and a dynamic image. In addition, the capture function may also refer to putting information forming a screen being output on the display unit 151, as a file in a different format, rather than in the image format. Here, "putting an image in" or putting a file in" may be understood as "storing an image in the memory" or "storing a file in the memory."

When a page (or an electronic document or a list) that can be output on the display unit 151 exceeds the size of the output region of the display unit 151, the first image 210 may be a capture image with respect to the entirety of the page, a capture image of at least a portion of the page exceeding the size of the output region of the display unit 151, and the like. The capture image of at least apportion of the page may be formed to have a ratio between a length and a width thereof is different to a ratio between a length and a width of the display unit 151. In this instance, the capture image of at least a portion of the page may be output on a partial region of the output region of the display unit 151.

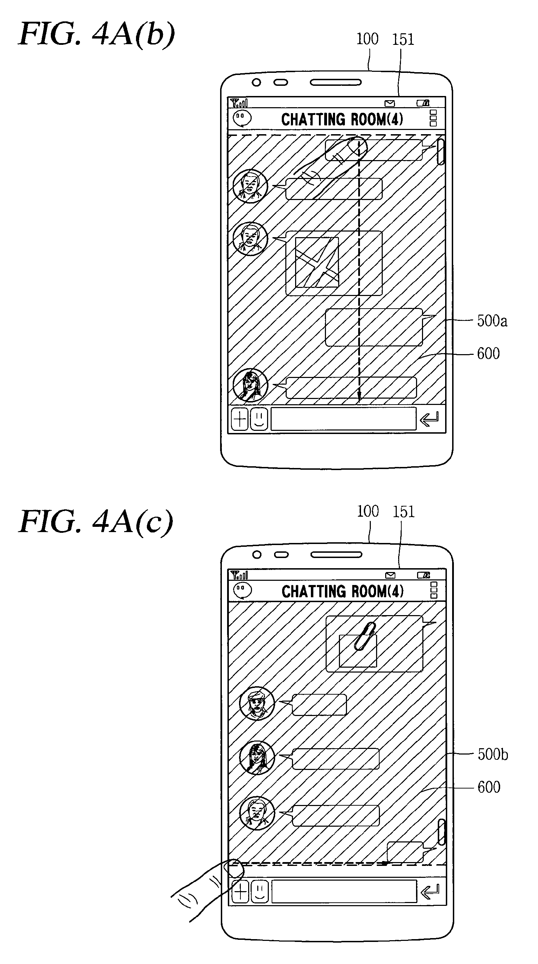

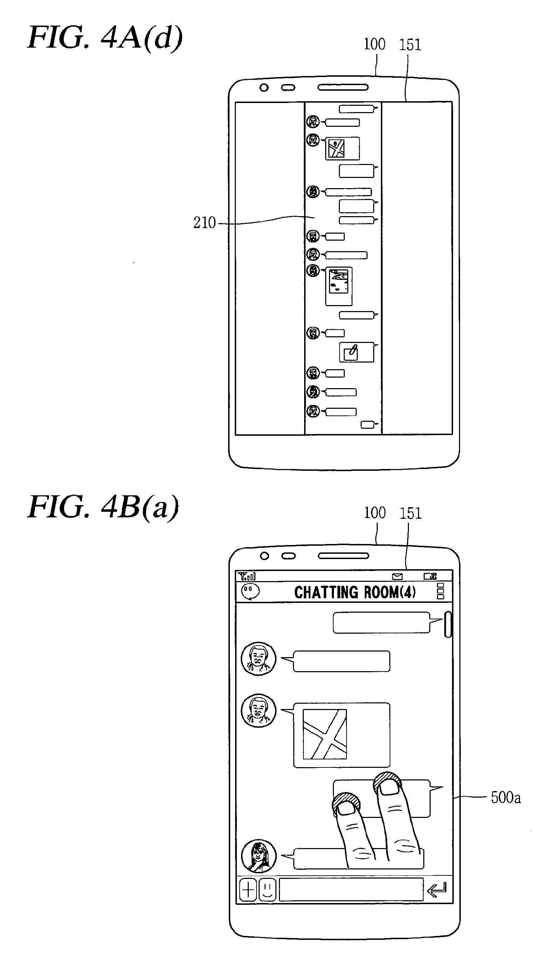

A method for generating a first image by capturing at least a portion of the page will be described in detail with reference to FIGS. 4A through 4C hereinafter. Thereafter, in an embodiment of the present disclosure, when one region of the output first image is selected, the display unit 151 is controlled to display a second image as a magnified image of the portion corresponding to the one region (S220). In more detail, when the first image 210 is output in a partial region of the output region of the display unit 151, and when a touch is applied to a region 310 of the first image 210, the controller 180 can output the second image 220 magnifying the portion corresponding to the region 310 on the display unit 151.

When the first image 210 is output, the controller 180 can select the region 310 based on various types of touches applied to the first image 210. The various types of touches are preset types of touches for selecting the region 310, and the preset types of touches may include any one among a short touch (or a tap), a double short touch, a long touch, a multi-touch, a drag touch, a flick touch, a pinch-in touch, a pinch-out touch, a swipe touch, and a hovering touch.

Also, when outputting of the first image 210 is maintained, the controller 180 can output the second image 220. In more detail, when the region 310 of the first image 210 output on the display unit 151 is selected, the controller 180 can output the second image 220 as a magnified portion corresponding to the region 310, together with the first image 210. That is, when the region 310 of the first image 210 is selected, the controller 180 can maintain outputting of the first image 210 and may output the second image 220 magnifying the portion corresponding to the region 310 to the display unit 151

The contents described so far may be clearly understood with reference to FIG. 3. As illustrated in (a) of FIG. 3, the controller 180 can output an image to a partial region of the output region of the display unit 151. In more detail, the controller 180 can output the first image 210 having a ratio different from the ratio between the length and the width of the display unit 151, to a partial region of the output region of the display unit 151. That is, the first image 210 may be output on a partial region of the display unit 151.

Hereinafter, as illustrated in (a) of FIG. 3, the ratio (length/width) of the length of the first image 210 to the width of the first image being greater than the ratio of the length of the display unit 151 to the width of the display unit 151 will be described as an example. However, the present disclosure is not limited thereto and the contents to be described hereinafter may be inferred and applied in the same or similar manner to any case in which the ratio between the length and the width of the first image 210 is different from the ratio between the length and the width of the display unit.

As illustrated in (b) of FIG. 3, when the first image 210 is output, one region 310 of the first image 210 may be selected. The selection may be performed by the user, and such a user selection may be expressed as a "user's control command" or a "control command." The selection may be performed in various manners. For example, selection of the one region 310 may be performed by a preset type of touch applied to the region 310 of the first image 210.

When the region 310 of the first image 210 is selected, the controller 180 can output the second image 220 as a magnified image of the portion corresponding to the region 310 on the display unit 151 as illustrated in (c) of FIG. 3. Here, as illustrated in (c) of FIG. 3, the second image 220 may be output when outputting of the first image 210 is maintained. That is, the controller 180 can output the first image 210 and the second image 220 together on the display unit 151.

When outputting of the first image 210 is maintained in various manners, the controller 180 can output the second image 220 on the display unit 151. For example, the first image 210 may be output on a partial region of the output region of the display unit 151, and the second image 220 may be output to a remaining region other than the partial region of the output region of the display unit 151. In more detail, the controller 180 can output the second region 220 on a remaining region excluding the partial region of the output region of the display unit on which the first image 210 is output.

Here, when the region 310 of the first image 210 is selected, the first image 210 may be moved in order to extend the remaining region in which the second image 220 is to be output as illustrated in (c) of FIG. 3. In more detail, in the display unit 151, as the first image 210 is output on a partial region of the output region of the display unit 151, the remaining region excluding the partial region exists. For example, as illustrated in (b) of FIG. 3, since the first image 210 is positioned in the middle of the display unit 151, the remaining regions exist on the one side (for example, on the left side) and on the other side (for example, on the right side) of the display unit 1561.

Here, the controller 180 can output the second image 200 to any one region among the remaining regions corresponding to the one side and the other side. Here, in order to expand the size of any one region in which the second image 220 is output, the controller 180 can move the first image 210 in any one direction among the one side and the other side.

For example, as illustrated in (c) of FIG. 3, in order to output the second image 220 to the remaining region corresponding to the other side among the remaining regions corresponding to the one side and the other side, the controller 180 can move the first image 210 to one side. As the first image 210 is moved in any one direction among the one side and the other side, the size of the remaining portion in which the second image 220 is output is increased. The second image 220 may be output to at least one of the remaining portion with an increased size.

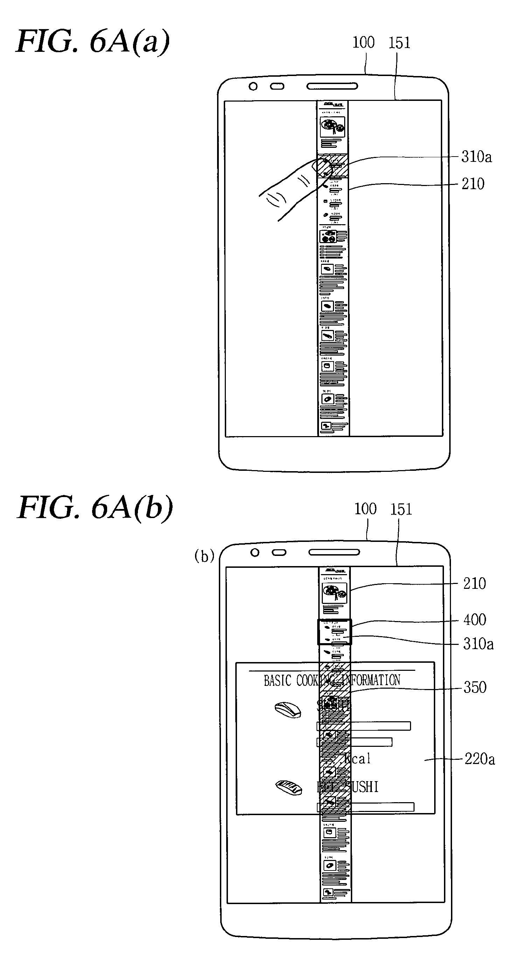

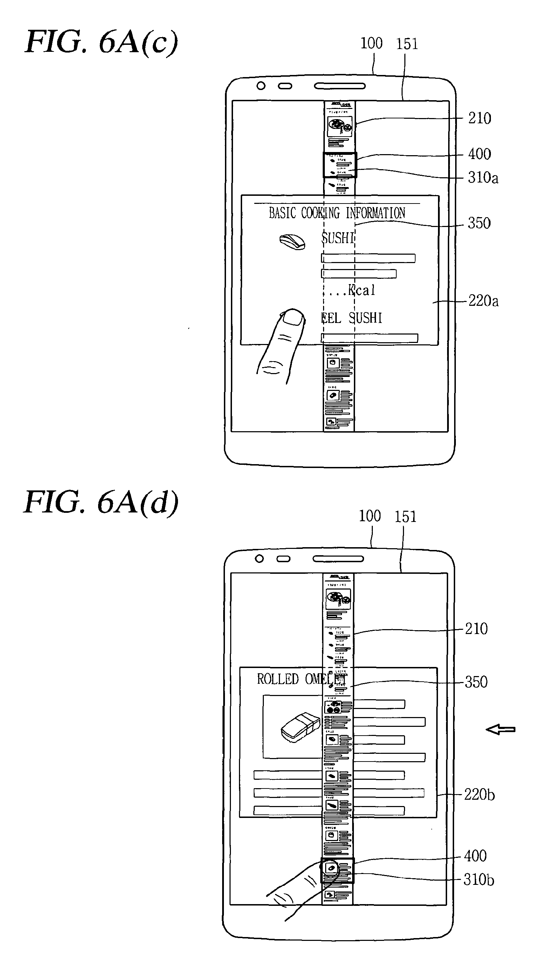

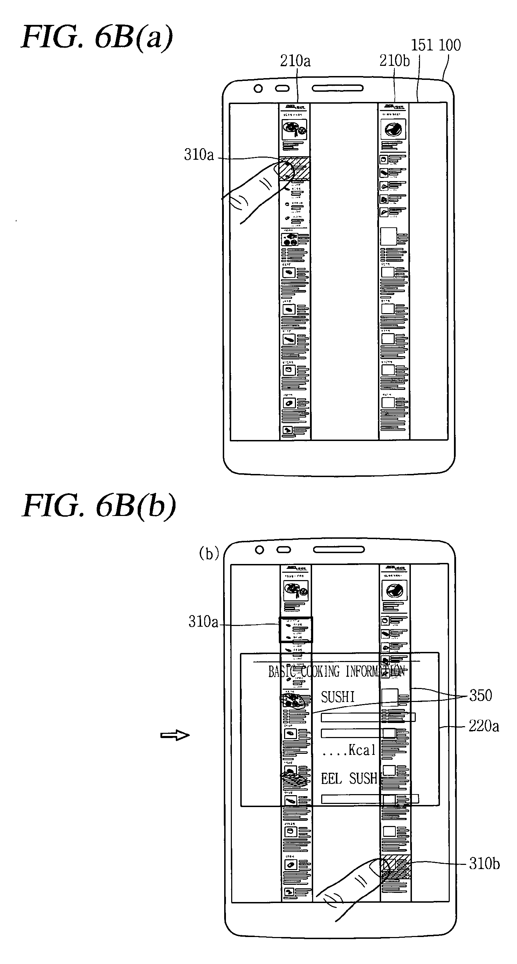

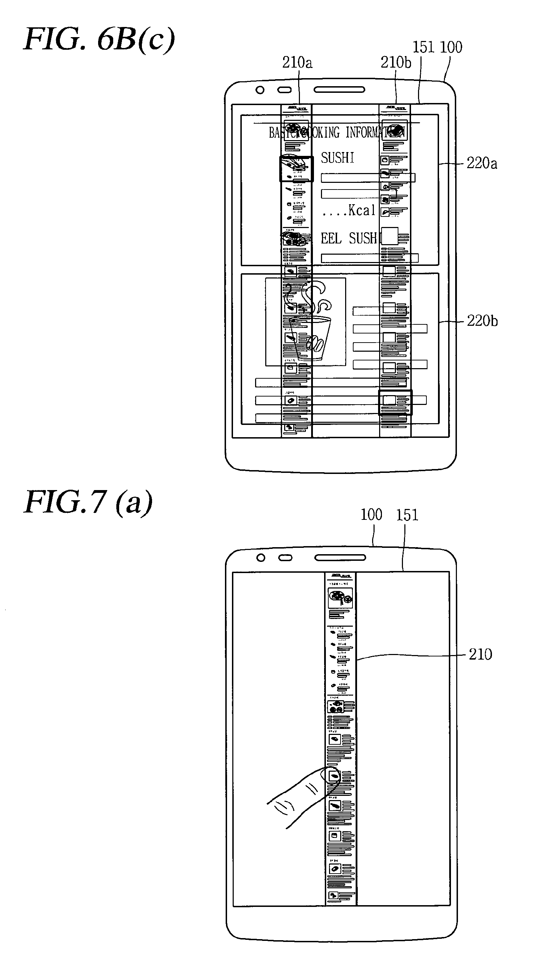

Meanwhile, the controller 180 can display the first and second images 210 and 220 to overlap with each other. That is, without moving the first image 210, the controller 180 can display the second image 220 to overlap with the first image 210. A method for outputting the first image 210 and the second image 220 in an overlapping manner will be described in detail with reference to FIGS. 6A and 6B hereinafter.

Meanwhile, as illustrated in (c) of FIG. 3, an indicator 400 (or a graphic object) guiding the portion corresponding to the one region 310 may be overlapped on the first image 210. In more detail, when the one region 310 of the first image 210 is selected, the controller 180 can output the second image 220 magnifying the portion corresponding to the one region 310. In order to guide the portion corresponding to the second image 220, the controller 180 can output the indicator 400 on one region 310 of the first image 210.

When the second image 220 is output, and when a touch is applied to at least one of the first image 210, the controller 180 can change the second image 220 into an image magnifying the touched portion of the first image 210, different from the first image 310. For example, when a touch is applied to a region different from the one region 310 of the first image 210, the controller 180 can change the second image 220 magnifying the portion corresponding to the one region 310 into an image magnifying the portion corresponding to the different region.

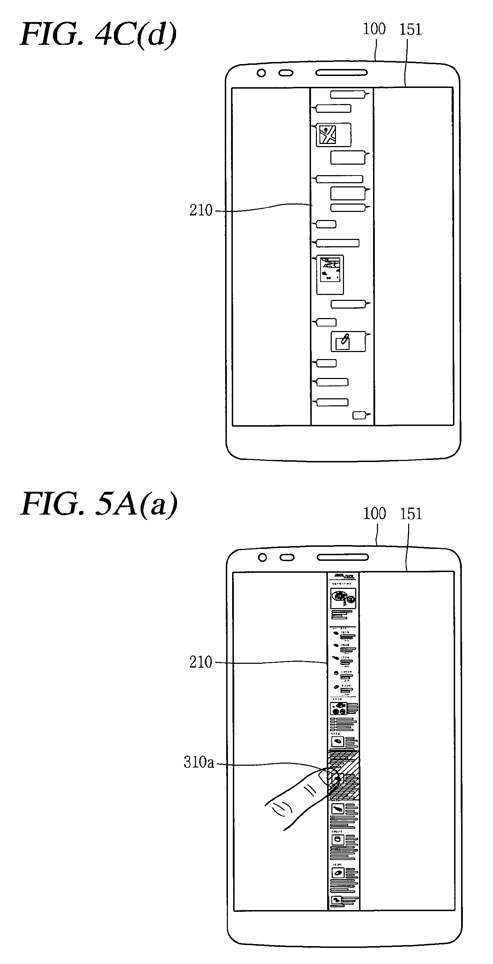

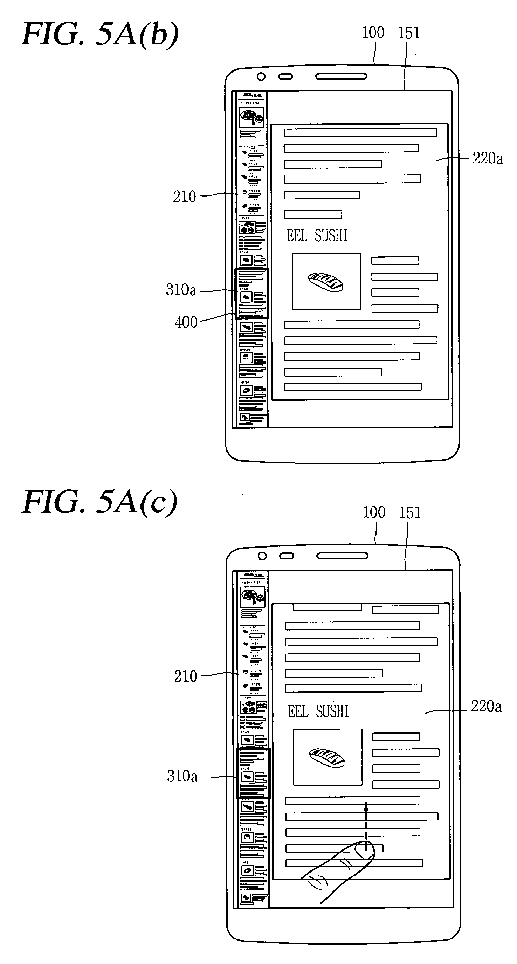

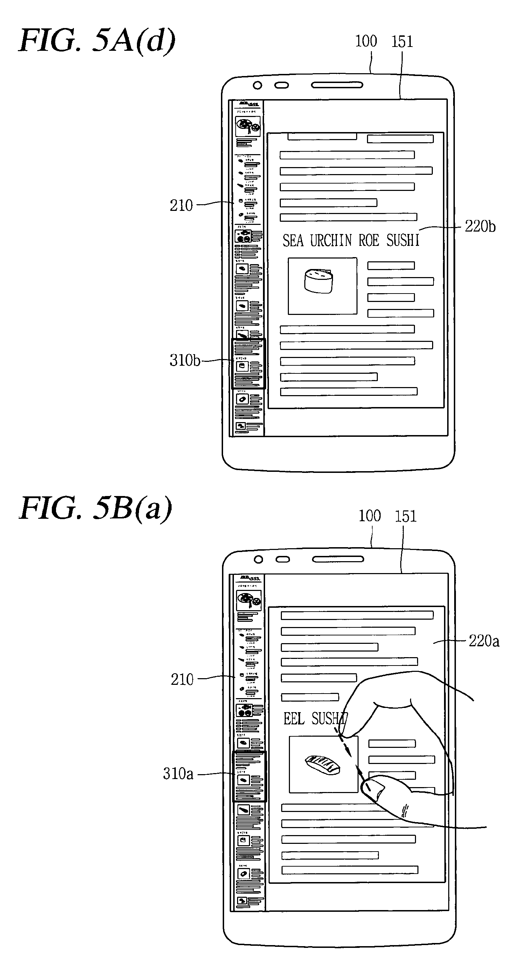

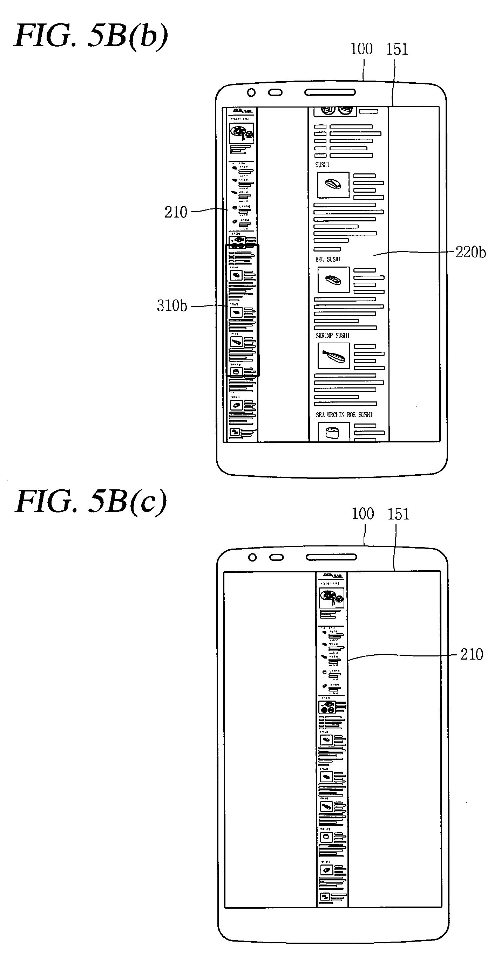

Also, based on a preset type of touch applied to the second image 220, the controller 180 can perform a zoom in function to magnify the size of the second image 220 or a zoom out function to reduce the size of the second image 220. Also, based on a preset type of touch applied to the second image 220, the controller 180 can change the second image 220 into an image magnifying the portion corresponding to a different region of the first image 210. A method for controlling the first image 210 and the second image 220 based on a preset type of touch applied to the second image 220 will be described in more detail with reference to FIGS. 5A and 5B. Meanwhile, based on a preset type of touch applied to the output second image 220, the controller 180 can perform various functions that may be executable in the mobile terminal 100. For example, when a preset type of touch (for example, a long touch) is applied to the second image 220, icons corresponding to various functions may be output. For example, the various functions may include a storage function, a share function, a deletion function, an editing function, and the like. Here, when an icon corresponding to the share function is selected, the controller 180 can share only the second image 220 magnifying the portion corresponding to one region of the first image 210. Also, when an icon corresponding to the storage function is selected, the controller 180 can store only the second image 220 in the memory 170.

As described above, in an embodiment of the present disclosure, while outputting of the first image 210 is maintained, the second image 220 magnifying a portion corresponding to one region of the first image 210 may be output. Also, in an embodiment of the present disclosure, an indicator may be output to the first image 210 in order to guide the portion corresponding to the second image 220. Thus, the user may magnify an image output in a partial region of the output region of the display unit 151 to view the magnified image conveniently, and easily recognize to which portion of image output on the partial region the magnified image corresponds.

Also, in an embodiment of the present disclosure, various functions may be performed with respect to the second image 220 magnifying a portion corresponding to one region of the first image 210. Thus, the embodiment of the present disclosure can provide a new user interface allowing only the second image 220 corresponding to one region of the first image 210 to be separately utilized, without editing the first image 210 separately.

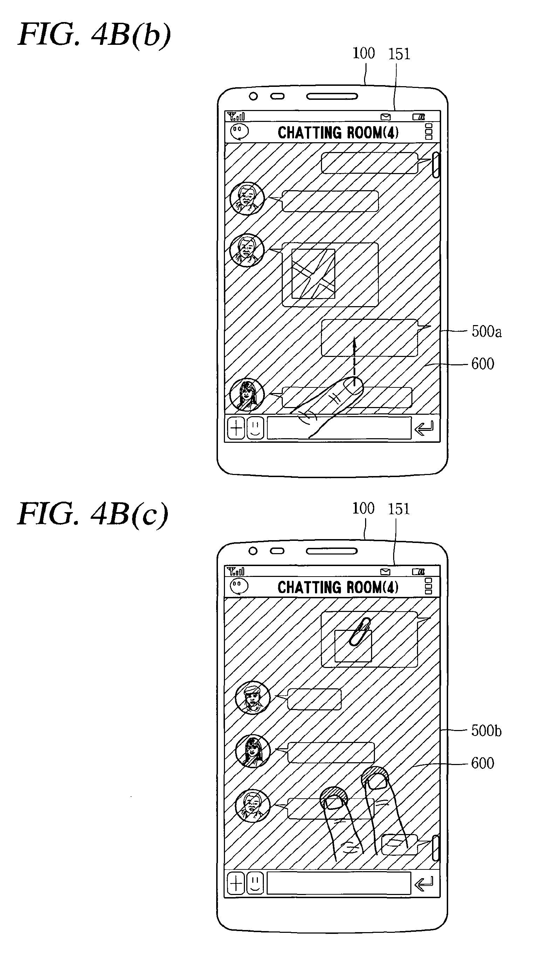

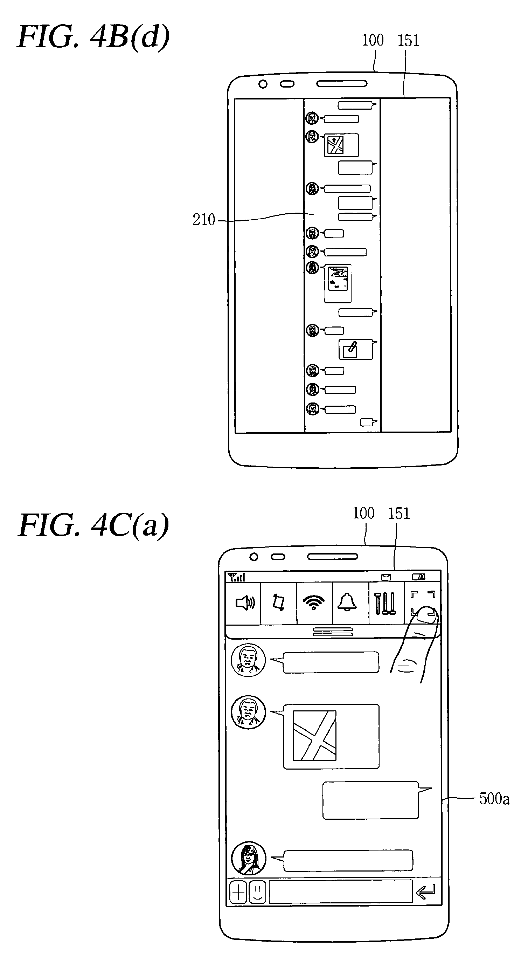

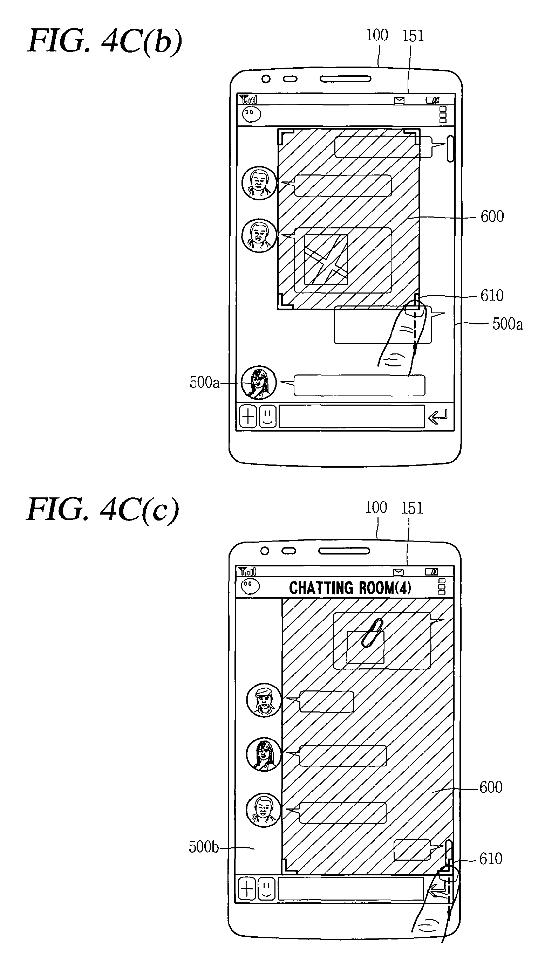

Hereinafter, a method for generating a first image having a ratio different from the ratio between the length and the width of the display unit 151 will be described in more detail with reference to the accompanying drawings. FIGS. 4A, 4B, and 4C are conceptual views illustrating a capture method to generate a first image according to an embodiment of the present disclosure.

The controller 180 can output at least one among an electronic document, a page, and a list exceeding the size of the output region of the display unit 151 on the display unit 151. Screen information 500a corresponding to at least a portion of a page (or an electronic document or a list) may be output on the display unit 151.

When the screen information 500a corresponding to at least a portion of the page is output on the display unit 151, and when a capture request is received, the controller 180 can capture the output screen information 500a. Meanwhile, the controller 180 can capture the entirety of the page output on the display unit 151 based on a user request. In more detail, when at least a portion of the page is output on the display unit 151, the mobile terminal 100 according to an embodiment of the present disclosure may perform a function to capture the entirety of the page. For example, for at least a portion of the page exceeding the output region of the display unit 151, and when a menu item associated with the function to capture the entirety of the page is selected, the controller may capture the entirety of the page.

The captured entirety of the page may be an image having a ratio different from the ratio between the length and the width of the display unit 151, and may correspond to a "first image." Meanwhile, the controller 180 can capture at least a portion of the page in various manners. In more detail, based on a preset type of touch applied to the region in which the page is output, the controller 180 can set a capture target region. The preset type of touch may be a touch associated with the capture function to capture at least a portion of the page exceeding the output region of the display unit 151.

For example, as illustrated in (a) of FIG. 4A, when a first drag touch extending from one side of the page to the other side opposing the one side is applied in the region on which the page is output, the controller 180 can determine that a control command for setting a capture target region 600 has been received. Thereafter, as illustrated in (b) of FIG. 4A, when a second drag touch extending from at least one point of the portion in which the first drag touch has been applied is applied, the controller 180 can vary a size of the capture target region 600 based on the second drag touch.

When the second drag touch applied to at least a portion 500a of the page extends to an edge portion (or a portion adjacent to the edge) of the at least portion 500a of the page as illustrated in (b) of FIG. 4A, the controller 180 can shift the page to display a portion 500b different from the at least one portion 500a of the page.

For example, as illustrated in (b) of FIG. 4A, when the second drag touch extending from at least one point of the first drag touch is applied downwardly and the second touch extends to an edge portion of the at least one portion 500a of the page, the controller 180 can shift the page upwardly. Accordingly, the portion 500b, which is positioned below the at least one portion 500a of the page and which has not been output, may be output on the display unit 151.

Also, the size of the capture target region 600 may be continuously magnified when the second drag touch is maintained. Thereafter, when the second drag touch is released and the first drag touch is applied again, the controller 180 can capture screen information included in the capture target region 600. Here, the capture target region 600 may be determined based on a portion to which the first drag touch has been applied and a point from which the second drag touch has been released.

Meanwhile, after the first drag touch is applied, the controller 180 can set any one region to which a touch has been applied, among first and second regions distinguished by the first drag touch, as the capture target region 600. For example, the first region may be a region corresponding to an upper portion with respect to the portion to which the first drag touch has been applied in the at least portion 500a of the page, and the second region may be a region corresponding to a lower portion with respect to the portion to which the first drag touch has been applied in the at least portion 500a of the page.

When the drag touch is applied to the second region, the controller 180 can set the capture target region 600 to correspond to the second region. Also, based on a drag touch applied to the second region in an upward direction, the controller 180 can shift the page upwardly. Here, a size of the capture target region 600 may be increased based on the drag touch applied to the second region. That is, when the capture target region 600 is set, the controller 180 can increase the size of the capture target region 600 based on a shift of the page.

In more detail, when the capture target region 600 is set in the second region, the controller 180 can set first screen information corresponding to the second region, among screen information included in the page, as a capture target. Thereafter, when the page is shifted, second screen information different from the first screen information may be output on the second region. When the first screen information is maintained as a capture target, the controller 180 can increase the size of the capture target region 600 to include the second screen information as a capture target.

As shown in (c) of FIG. 4A, when a portion 500b different from the at least one portion 500a is output based on the drag touch applied to the second region, and when the first drag touch is applied to the portion 500b again, the controller 180 can determine the capture target region 600 based on the first drag touch applied to the at least portion 500a of the page and the first drag touch applied again to the different portion 500b.

Screen information included in the capture target region 600 may include screen information included in the at least portion 500a and the different portion 500b of the page. Based on a user request, the controller 180 can capture screen information included in the capture target region 600. The user request may include applying the first drag touch again or a touch applied to an icon associated with the capture function, and the like. Screen information captured through the method described above may be a first image 210 having a ratio different from the ratio between the length and the width of the display unit 151 as illustrated in (d) of FIG. 4A.

In another example, as illustrated in (a) and (b) of FIG. 4B, when at least a portion 500a of the page is output on the display unit 151, and when a preset type of touch is applied, the controller 180 can set the at least a portion 500a of the output page, as a capture target region 600. The preset type of touch may be, for example, a two-finger long touch.

When the at least a portion 500a of the output page is set as a capture target region 600, and when a drag touch is applied to the capture target region 600, the controller 180 can shift the page such that the portion 500b different from the at least one portion 500a of the page is displayed as illustrated in (b) and (c) of FIG. 4B. Also, as illustrated in (b) and (c) of FIG. 4B, based on a drag touch applied to the capture target region 600, the controller 180 can increase the size of the capture target region 600 such that screen information corresponding to the different portion 500b is included.

Thereafter, as illustrated in (c) of FIG. 4B, when a preset type of touch (for example, a two-finger long touch) is applied to the capture target region 600, the controller 180 can capture screen information included in the capture target region 600. Likewise as described above with reference to FIG. 4A, screen information included in the capture target region 600 may include screen information included in the at least a portion 500a and the different portion 500b of the page. Also, the captured screen information may be a first image 210 having a ratio different from the ratio between the length and the width of the display unit 151 as illustrated in (d) of FIG. 4B.

In another example, when an icon (or a menu item) for setting the capture target region 600 is selected as illustrated in (a) of FIG. 4C, the capture target region 600 may be set in the display unit 151 as illustrated in (b) of FIG. 4C. The capture target region 600 may have a preset size. Also, a graphic object 610 for varying the size of the capture target region 600 may be output on the capture target region 600.

Based on a drag touch applied to a region excluding the graphic object 610 in the capture target region 600, the controller 180 can move the position of the capture target region 600. Also, based on a drag touch applied to the graphic object 610, the controller 180 can vary the size of the capture target region 600.

For example, as illustrated in (b) of FIG. 4C, when a drag touch extending from any one point of the graphic object 610 is applied, the controller 180 can vary the size of the capture target region 600. When the drag touch extending from any one point of the graphic object 610 extends up to an edge portion (or a portion adjacent to the edge) of the at least one portion 500a of the page output on the display unit 151, the controller 180 can shift the page such that the portion 500b different from the at least one portion 500a of the page is displayed, as illustrated in (c) of FIG. 4C.

Also, the size of the capture target region 600 may be continuously increased when the drag touch applied to the graphic object 610 is maintained. Thereafter, when a control command for capturing the capture target region 600 is received, the controller 180 can capture screen information included in the capture target region 600. The control command for capturing the capture target region 600 capture target region 600 may be performed in various manners. For example, an icon (or a menu item) for capturing the capture target region 600 may be selected, or a preset type of touch (for example, a long touch) may be applied to the capture target region 600.

Likewise as described above with reference to FIG. 4A, screen information included in the capture target region 600 may include screen information included in the at least one portion 500a and the different portion 500b of the page. Also, the captured screen information may be the first image 210 having a ratio different from the ratio between the length and the width of the display unit 151 as illustrated in (d) of FIG. 4C. When images captured through the method of FIGS. 4A to 4C have a ratio different from the ratio between the length and the width of the display unit 151, the images may correspond to the first image 210 according to an embodiment of the present disclosure.

As described above, in an embodiment of the present disclosure, with respect to a page exceeding the output region of the display unit 151, the user can capture his or her desired portion as one image. Thus, user inconvenience including having to perform a capturing operation several times if a desired portion is not output when the user captures a page exceeding the output region of the display unit, can be reduced. Also, in an embodiment of the present disclosure, the user's need for capturing his or her desired portion as one image with respect to a page exceeding the output region of the display unit 151 can be satisfied.

Hereinafter, a method for outputting a first image having a ratio different from the ratio between the length and the width of the display unit captured by at least one of the methods described above will be described in detail with reference to the accompanying drawings. In particular, FIGS. 5A, 5B, 6A, 6B, and 7 are conceptual views illustrating a method for outputting an image according to an embodiment of the present disclosure.

As illustrated in (a) of FIG. 5A, a first image 210 may be output on a partial region of the display unit 151. Here, when a preset type of touch is applied to the first image 210, the controller 180 can select one region 310a of the first image 210. For example, when a short touch is applied to the first image 210, the controller 180 can select the one region 310a having a preset size based on the point to which the short touch has been applied.

Thereafter, as illustrated in (b) of FIG. 5A, based on the selection of the one region 310a, the controller 180 can output a second image 220a magnifying the portion corresponding to the one region 310a, together with the first image 210. An indicator 400 may be output in the first image 210 such that the indicator 400 corresponds to the one region 310a.

Based on various types of touches applied to the second image 220a, the controller 180 can change the second image 220a to an image 220b different from the second image 220a. For example, as illustrated in (c) of FIG. 5A, when a drag touch is applied to the second image 220a, the second image 220a may be changed to a third image 220b magnifying a portion corresponding to the region 310b different from the one region 310a as illustrated in (d) of FIG. 5A.

Here, the indicator 400 overlapping on the first image 210 may be moved from the one region 310a to the different region 310b. That is, the controller 180 can display the indicator 400 to correspond to the different region 310b.

In addition, based on a drag touch applied to the indicator 400 displayed in the first image 210, the controller 180 can change the one region 310a to a different region 310b. Here, the indicator 400 may be displayed to correspond to the different region 310b, and the second image 220a may be changed to a third image 220b magnifying the portion corresponding to the different region 310b.

Meanwhile, based on a preset type of touch applied to the second image 220a, the controller 180 can change the size of the one region 310a of the first image 210. For example, when a preset type of touch (for example, a pinch-in touch) is applied to the second image 220a as illustrated in (a) of FIG. 5B, the controller 180 can increase the size of the one region 310a as illustrated in (b) of FIG. 5B. In this instance, the second image 220a may be changed to an image 220b magnifying the portion corresponding to the one region 310b having an increased size. The touch for increasing the size of the one region 310a may include a pinch-in touch applied to the second image 220a, a double short touch applied to the one region 310a of the first image 210, a pinch-out touch applied to the one region 310a of the first image 210, and the like. Also, the indicator 400 may be displayed to correspond to the one region 310b having the changed sized.

In addition, when a pinch-out touch is applied to the second image 220a, the controller 180 can reduce the size of the one region 310a. In this instance, the second image 220a may be changed to an image magnifying the portion corresponding to the region 310a having the reduced size in the first image 210.

In addition, based on a preset type of touch applied to the indicator 400, the controller 180 can vary the size of the one region 310a. For example, when a drag touch extending from an edge of the indicator 400 is applied, the controller 180 can vary the size of the one region 310a based on the drag touch. Alternatively, when a long touch is applied to the indicator 400, the mobile terminal 100 may be changed to a mode in which the size of the indicator 400 can be varied. Thereafter, when the mobile terminal 100 has entered the mode, the controller 180 can vary the size of the one region 310a based on a drag touch extending from an edge of the indicator 400.

Meanwhile, when the size of the one region 310a is increased to be greater than a reference size (when the size of the image 220b magnifying the portion corresponding to the one region 310b having the increased size is reduced to be smaller than the reference size), the controller 180 can control the display unit 151 to output only the first image 210 as illustrated in (c) of FIG. 5B. That is, when the size of the one region 310b of the first image 210 is increased to be larger than the reference size, the controller 180 can limit output of the image 220b magnifying the portion corresponding to the one region 310b having an increased sized.

Meanwhile, when a preset type of touch is applied to the second image 220a, the controller 180 can change the size of the second image 220a itself output on the display unit 151. For example, when a pinch-in touch is applied to the second image 220a, the controller 180 can reduce the size of the second image 220a itself. When the size of the second image 220a is reduced to be smaller than the reference size, the controller 180 can limit output of the second image 220a.

Also, when a pinch-out touch is applied to the second image 220a, the controller 180 can increase the size of the second image 220a itself. When only a portion of the second image 220a is output as the size of the second image 220a is increased, the controller 180 can change the size of the indicator 400 overlapping on the first image 210 to correspond to a portion of the second image 220a.

Meanwhile, the controller 180 can display the first image 210 and the second image 220a in an overlapping manner. In more detail, when one region 310a of the first image 210 is selected, the controller 180 can output the second image 220a magnifying the portion corresponding to the one region 310a, together with the first image 210. Here, the controller 180 can display the first image 210 and the second image 220a in an overlapping manner, without moving the first image 210.

For example, as illustrated in (a) of FIG. 6A, when one region 310a of the first image 210 is selected, the controller 180 can display the second image 220a magnifying the portion corresponding to the one region 310a such that the second image 220a overlaps with the first image 210 as illustrated in (b) of FIG. 6A.

Here, in the overlap portion 350 of the first image 210 and the second image 220a, the controller 180 can adjust the transparency of at least one of the first image 201 and the second image 220a such that at least one of the first image 210 and the second image 220a can be visible (or recognized).

For example, as illustrated in (b) of FIG. 6A, when the second image 220a is displayed to overlap with the first image 210, the controller 180 can control the transparency of the first image 210 and the second image 220a such that both the first image 210 and the second image 220a are recognized in the portion 350 in which the first image 210 and the second image 220 overlap with each other.

Thereafter, when a touch is applied to any one of the first image 210 and the second image 220a, the controller 180 can output an image corresponding to an overlapping portion 350 in the image to which the touch has been applied, in the portion 350 in which the first and second images overlap with each other. Namely, the controller 180 can limit output of an image corresponding to the overlapping portion among an image other than the image to which the touch has been applied, in the overlapping portion 350 in which the first and second images overlap with each other.

For example, as illustrated in (c) of FIG. 6A, when both the first image 210 and the second image 220a are output to be recognizable in the portion 350 in which the first image 210 and the second image 220a overlap with each other, when a touch is applied to the second image 220a, the controller 180 can output an image corresponding to the overlapping portion 350 in the second image 220a to which the touch has been applied, in the overlapping portion 350. Here, output of the image corresponding to the overlapping portion 350 in the first image 210 may be limited.

Meanwhile, in the overlapping portion 350, when the image corresponding to the overlapping portion 350 in the second image 220a is output, when a region 310b different from the one region 310a of the first image 210 is selected (or touched), the controller 180 can change the second image 220a to a third image 220b magnifying the portion corresponding to the different region 310b. Here, as illustrated in (d) of FIG. 6A, as a touch is applied to the first image 210, an image corresponding to the overlapping portion 350 in the first image 210 may be output to the portion 350 in which the first image 210 and the third image 220b overlap with each other. Also, outputting of the image of the third image 220b corresponding to the overlapping portion 350 may be limited.

Meanwhile, a method for controlling outputting of an image in the overlapping portion may be performed in various manners. For example, when the second image magnifying the portion corresponding to one region of the first image is output to overlap with the first image, the controller 180 can provide control to output the image of the second image corresponding to the overlap portion, in the portion in which the first and second images overlap with each other. Thereafter, only while a touch (for example, a short touch or a drag touch applied to the first image) for changing the one region is maintained in the first image, the controller may output the image corresponding to the overlapping portion in the first image, on the overlapping portion. Thereafter, when the touch applied to the first image is released, the controller 180 can limit outputting of the image of the first image corresponding to the overlapping portion, in the overlapping portion.

Meanwhile, at least two first images 210a and 210b may be output together on the display unit 151. For example, as illustrated in (a) of FIG. 6B, a plurality of first images 210a and 210b each having a ratio different from the ratio between the length and the width of the display unit 151 may be output on the display unit 151. Here, when one region 310a of any one 210a of the first images is selected, the controller 180 can output a second image 220a magnifying the portion corresponding to the one region 310a, such that the second image 220a overlaps with the plurality of first images 210a and 210b, as illustrated in (b) of FIG. 6B.

When the second image 220a magnifying the portion corresponding to the any one region 310a is output, and when one region 310b of the other image 210b, different from the one image 210a, among the first images, is selected, the controller 180 can output a second image 220b magnifying the portion corresponding to the other any one region 310b such that the second image 220b overlaps with the plurality of first images 210a and 210b as illustrated in (c) of FIG. 6B.

In this instance, as illustrated in (c) of FIG. 6B, the controller 180 can display such that the second image 220a magnifying the portion corresponding to the one region 310a of the any one 210a and the second image 220b magnifying the portion corresponding to the one region 310b of the other 210b do not overlap with each other.

Thus, when one region 310b of the other image 210b is selected, the controller 180 can move the second image 220a magnifying the portion corresponding to the one region 310a of the any one image 210a. Also, the controller 180 can reduce the size of the second image 220a itself magnifying the portion corresponding to the one region 310a of any one image 210a or reduce the size of the one region 310a of the any one image 210a and to output a second image magnifying the portion corresponding to the reduced one region 310a.

For example, a reduction in the size of the one region 310a of the any one image 210a may be a reduction in the length among the length and the width of the one region 310a. Also, based on the size of the second image 220a magnifying the portion corresponding to the one region 310a of any one image 210a, the controller 180 can determine a size of the second image 220b magnifying the portion corresponding to the one region 310b of the other image 210b.

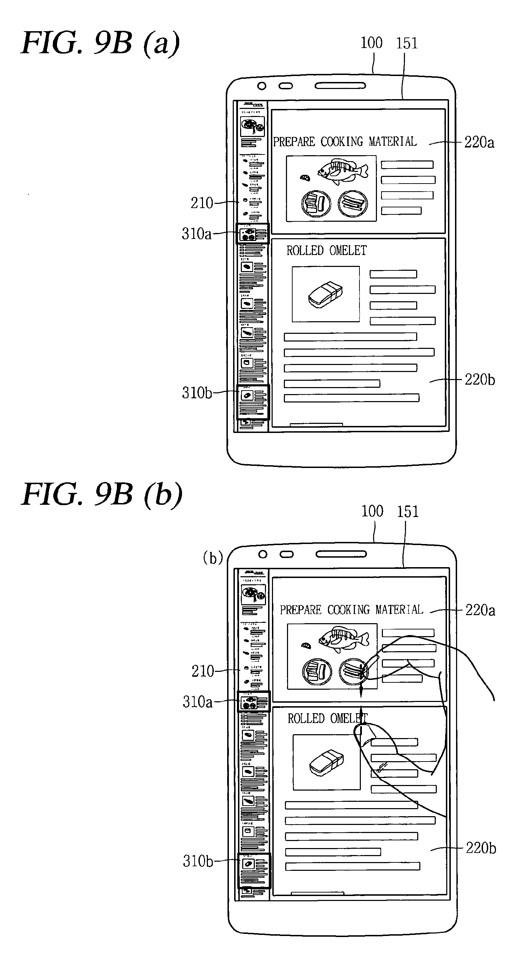

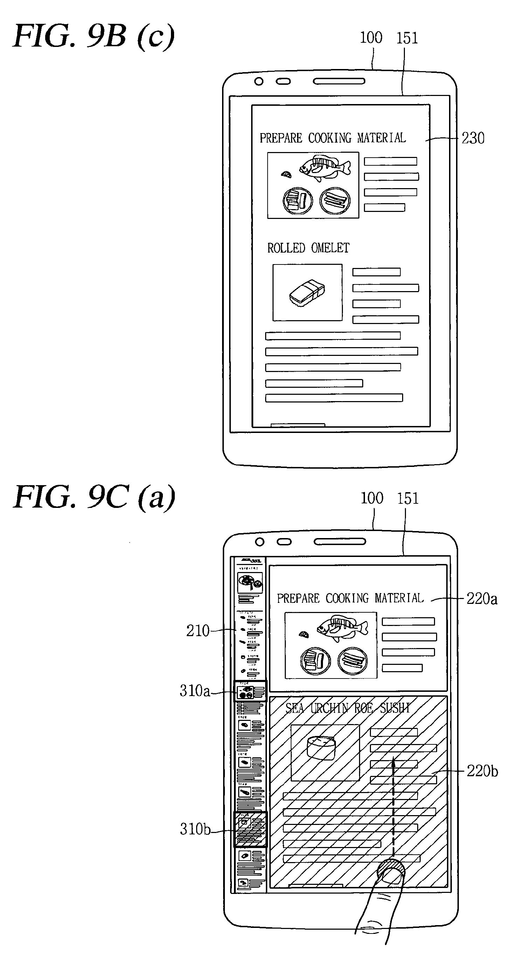

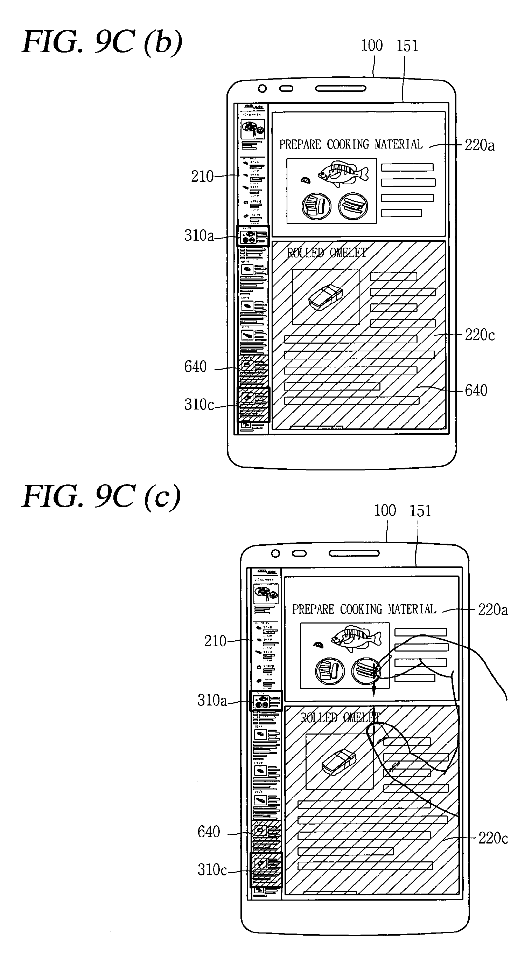

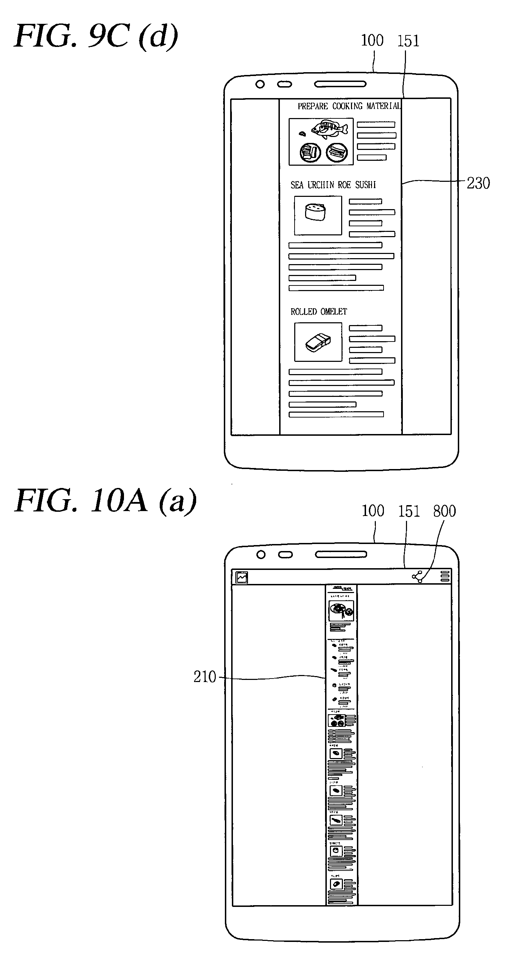

Also, the controller 180 can generate a new image by using the second images 220a and 220b. Contents to be described hereinafter with reference to FIGS. 9B and 9C may be inferred and applied in the same or similar manner to a method for generating a new image by using the second images 220a and 220b.

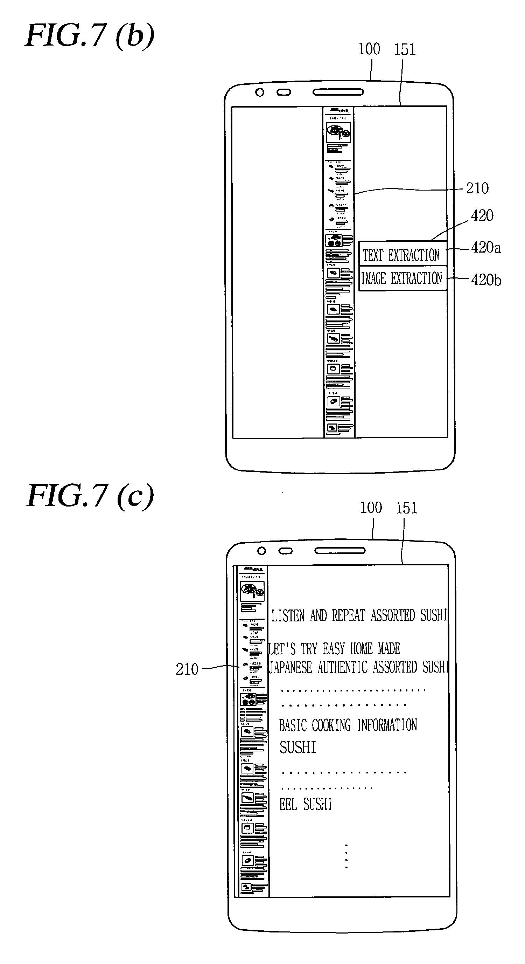

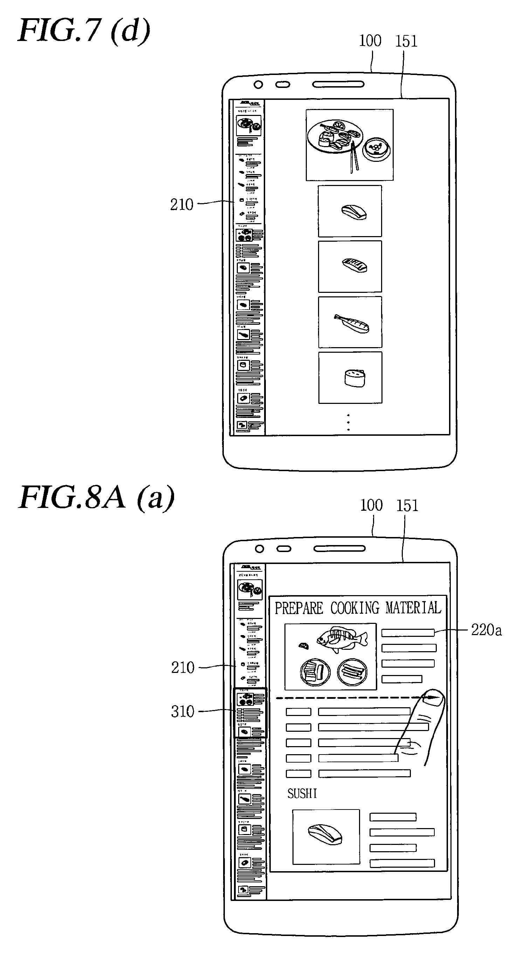

Meanwhile, the controller 180 can extract screen information included in the first image by types of the screen information. In more detail, a first image may include at least one of text and an image. For example, as illustrated in (a) of FIG. 7, a first image 210 including text and an image may be output on the display unit 151. Here, when a preset type of touch is applied to the first image 210 as illustrated in (a) of FIG. 7, the controller 180 can output a menu 420 for selecting screen information that can be extracted from among screen information included in the first image 210 as illustrated in (b) of FIG. 7.

The menu 420 may be output when outputting of the first image 210 is maintained. Also, the menu 420 may include a text extraction item 420a and an image extraction item 420b for selecting screen information that can be extracted. Here, when the text extraction item 420a is selected, the controller 180 can extract text among screen information included in the first image 210 as illustrated in (c) of FIG. 7.

Also, when the image extraction item 420b is selected, the controller 180 can extract images from among the screen information included in the first image 210 and display the same as illustrated in (d) of FIG. 7. When any one screen information, among screen information that can be extracted, is extracted and output, the controller 180 can apply a graphic effect to a portion corresponding to the extracted screen information.

As described above, in an embodiment of the present disclosure, with respect to a first image having a ratio different from the ratio between the length and the width of the display unit, a second image magnifying a portion corresponding to one region of the first image may be output together with the first image. Also, the user can easily recognize which portion of the first image the second image is magnified. That is, the user can be provided with a graphic user interface (GUI) optimized for outputting an image having a ratio different from the ratio between the length and the width of the display unit.

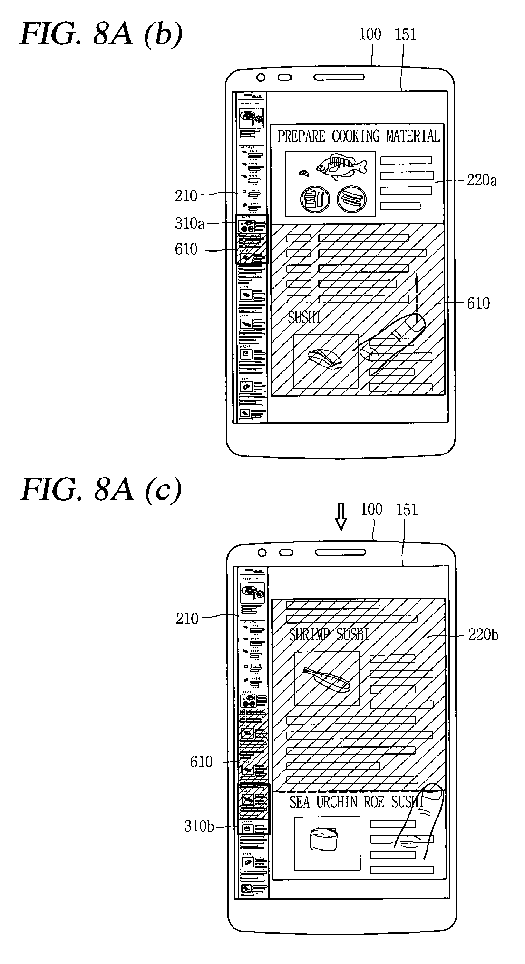

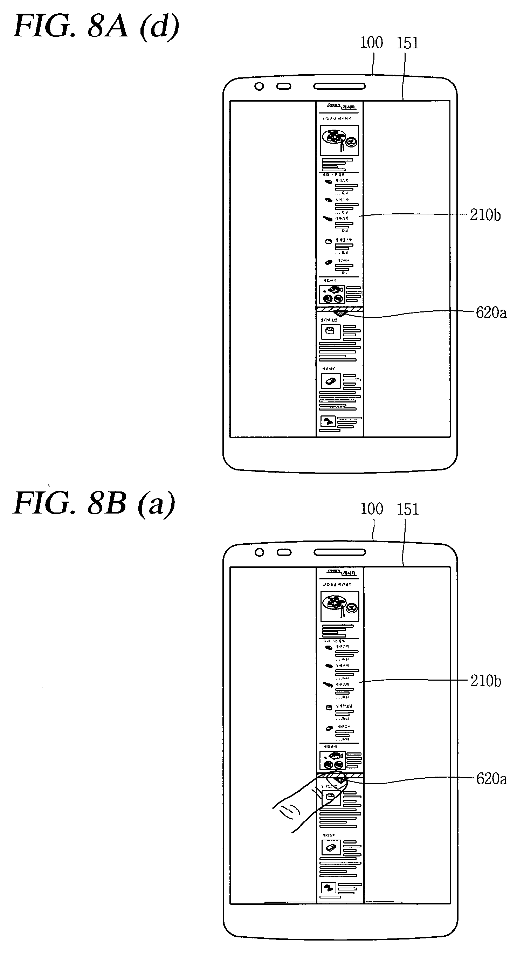

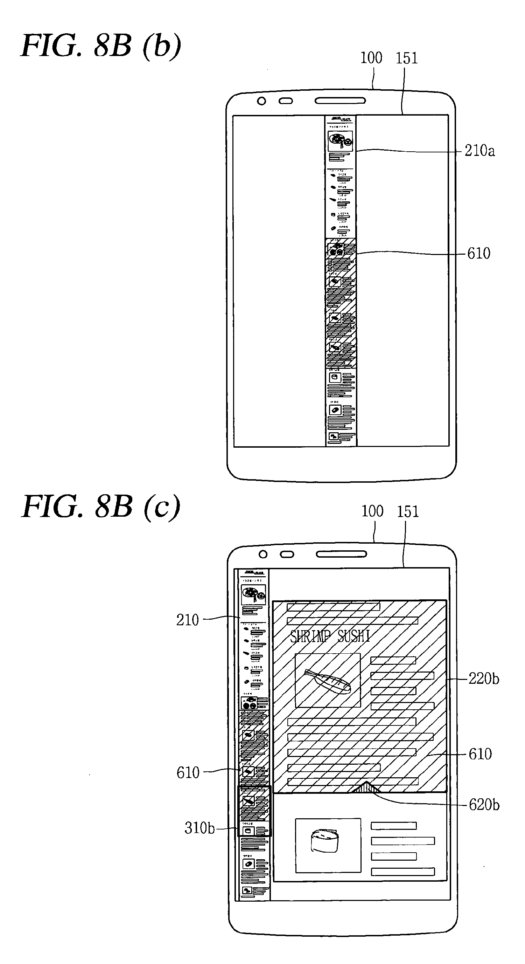

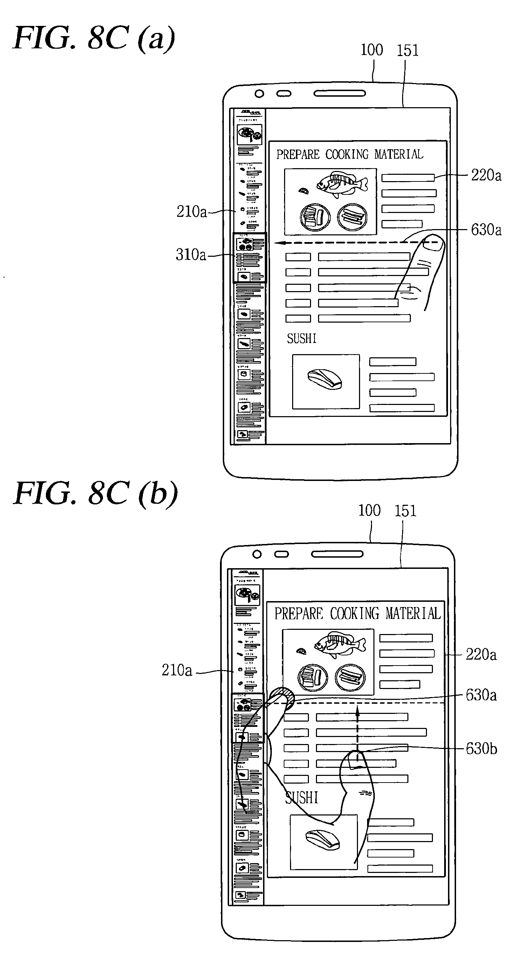

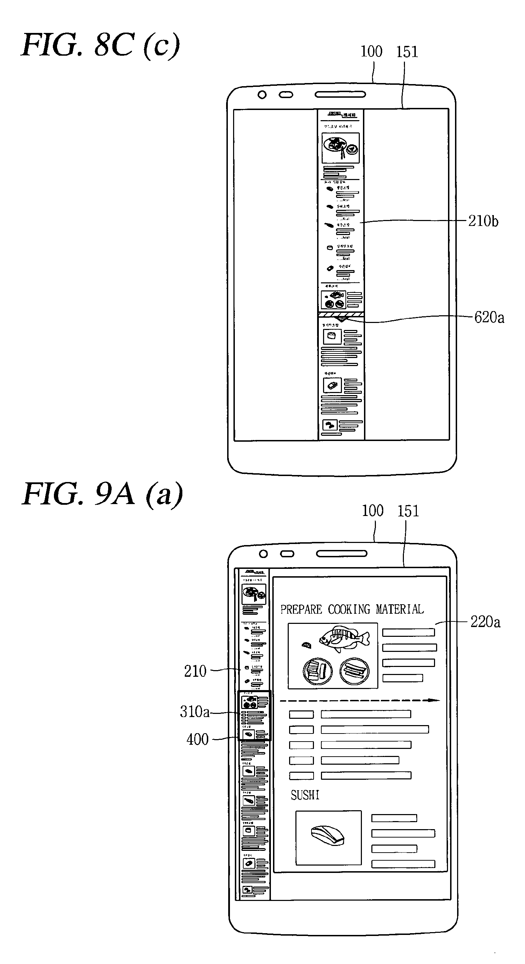

Hereinafter, a method for changing an output form of a first image by using first and second images will be described in detail with reference to the accompanying drawings. In particular, FIGS. 8A, 8B, and 8C are conceptual views illustrating a method for changing an output format of a first image such that outputting of at least a portion of the first image is limited by using a second image magnifying a portion corresponding to one region of the first image.

Based on a preset type of touch applied to the second image 220a magnifying a portion corresponding to one region 310a of the first image 210, the controller 180 can change an output form of the first image 210 such that outputting of at least a portion of the first image 210 is limited. For example, as illustrated in (a) of FIG. 8A, the first image 210 and the second image 220a magnifying a portion corresponding to one region 310 of the first image 210 may be output on the display unit 151. When a preset type of touch is applied to the second image 220a, the controller 180 can determine that a control command for setting an output limitation region 610 has been received. The preset type of touch may be at least two drag touches applied at different times. In more detail, when a first drag touch is applied to the second image 220a and a second drag touch different from the first drag touch is applied to a portion different from a portion to which the first drag touch has been applied, the controller 180 can limit output of an image positioned between the portions to which the first and second drag touches have been applied, in the first image.

For example, as illustrated in (a) of FIG. 8A, when a first drag touch extending from one side of the second image 220a and released from the other side of the second image 220a is applied to the second image 220a, the controller 180 can determine that a control command for setting the output limitation region 610 has been received.

After the first drag touch is applied, the controller 180 can set a region, to which a touch is applied among a first region and a second region divided by the first drag touch, to the output limitation region 610 as shown in (b) of FIG. 8A. For example, the first region may be a region of the second image 220a corresponding to an upper side with respect to the portion to which the first drag touch has been applied, and the second region may be a region of the second image 220a corresponding to a lower side with respect to the portion to which the first drag touch has been applied.

When a drag touch is applied to the second region in a direction different from the direction in which the first drag touch has been applied, the controller 180 can set the output limitation region 610 to correspond to the second region. Also, based on a drag touch applied to the second region in an upward direction, the controller 180 can change the second image 220a to an image 220b magnifying the portion corresponding to the region 310b different from the one region 310a of the first image. Here, the size of the output limitation region 610 may be magnified based on the drag touch applied to the second region. A graphic effect may be applied to the first image such that the output limitation region 610 can be recognized as illustrated in (b) and (c) of FIG. 8A.

When the second image 220a has been changed to the image 220b magnifying the portion corresponding to the region 310b different from the one region 310a of the first image based on the drag touch applied to the second region, a preset type of touch (for example, a second drag touch extending from one side of the magnified image 220b and released from the other side of the magnified image 220b) may be applied again to the image 220b magnifying the portion corresponding to the different region 310b. Based on the preset type of touch applied again, the controller 180 can limit output of the image between the portions to which the first and second drag touches have been applied, in the first image 210.

In other words, based on the preset type of touch (the first drag touch) applied to the second image 220a magnifying the portion corresponding to the one region 310a of the first image and the preset type of touch (the second drag touch) applied again to the image 220b magnifying the portion corresponding to the different region 310b of the first image, the controller 180 can determine the output limitation region 610.

The image between the portions to which the first and second drag touches have been applied may be an image corresponding to the output limitation region 610. Thereafter, as illustrated in (d) of FIG. 8A, when the output limitation region 610 is determined (when the preset type of touch is applied again), the controller 180 can output a first image 210b deformed in an output form thereof to limit outputting of the portion corresponding to the output limitation region 610, to the display unit 151.

Meanwhile, the method for setting the capture target region 600 described above with reference to FIGS. 4A through 4C may be applied in the same or similar manner to the method for setting the output limitation region 610. Meanwhile, an icon 620a guiding that the first image 210b includes an image limited in output thereof may be output on the first image 210b having a deformed output form. For example, as illustrated in (d) of FIG. 8A, the controller 180 can output the icon 620a indicating that the image limited in output thereof exists in the first image 210b having a deformed output form, to the first image 210b.

When a touch is applied to the icon 620a, the controller 180 can restore the output form of the first image such that the output-limited image may be output again. For example, when a touch is applied to the icon 620a as illustrated in (a) of FIG. 8B, the first image 210b having a restored output form such that the output-limited image can be output again may be output on the display unit 151 as illustrated in (b) of FIG. 8B.

The output limitation region 610 may be continuously set in the first image 210a having the restored output form. That is, as illustrated in (b) of FIG. 8B, a graphic effect indicating that the output limitation region 610 has been set may be applied to the first image 210a having the restored output form.

Also, an icon 620b for limiting outputting of an image corresponding to the output limitation region 610 may be displayed in the first image 210a having the restored output form. For example, as illustrated in (c) of FIG. 8B, the icon 620b for limiting output of the image corresponding to the output limitation region 610 may be output to the image 220b magnifying the portion corresponding to the different region 310b of the first image 210a having the restored output form. When a touch is applied to the icon 620b, the controller 180 can deform an output form of the first image 210a such that outputting of an image corresponding to the output limitation region 610 may be limited as illustrated in (a) of FIG. 8B.

Meanwhile, the controller 180 can change an output form of the first image such that outputting of at least a portion of the first image can be limited through various schemes. In more detail, among first and second drag touches applied in mutually perpendicular directions, when the second drag touch is applied to the second image after the first drag touch is applied to the second image, the controller 180 can limit outputting of at least portion of the first image.

For example, as illustrated in (a) of FIG. 8C, a first drag touch 630a extending from one side of the second image 220a to the other side of the second image 220a may be applied to the second image 220a magnifying the portion corresponding to the one region 310a of the first image 210a. Thereafter, when a second drag touch 630b is applied to the second image 220a in a direction perpendicular to the direction in which the first drag touch 630a has been applied, the controller 180 can change an output form of the first image 210a such that output of at least a portion of the first image 210a is limited based on the second drag touch 630b.

Meanwhile, when the first drag touch 630a is maintained at one point at the other side, when the second drag touch 630b is applied, the controller 180 can change an output form of the first image 210a. For example, as illustrated in (b) of FIG. 8C, when the first drag touch 630a starts from one side of the second image 220a and applied toward the other side and the first drag touch 630a is maintained at one point of the other side, the controller 180 can sense that the second drag touch 630b is applied. Here, based on the second drag touch 630b applied in the state in which the first drag touch 630a is maintained, the controller 180 can provide control such that at least a portion of the second image 220a disappears.

Also, based on the second drag touch 630b, the controller 180 can magnify a portion positioned below the one region 310 of the first image 210a and output the same. Here, outputting of the image of the second image 220a positioned above with respect to the first drag touch 630a may be maintained. Also, the image of the second image 220a positioned below with respect to the first drag touch 630a may be changed by the second drag touch 630b. That is, based on the second drag touch 630b, the controller 180 can make at least portion of the image positioned below with respect to the first drag touch 630a disappear. Also, based on the second drag touch 630b, the controller 180 can output an image of the first image magnifying the portion positioned below the one region 310.

Thereafter, as illustrated in (c) of FIG. 8C, when the first drag touch 630a maintained at one point of the other side is released, the controller 180 can change an output form of the first image such that outputting of the portion of the first image which has disappeared based on the second drag touch 630b.

As described above, according to an embodiment of the present disclosure, an output form of the first image can be deformed by using the first and second images. Thus, the user's need to limit outputting of a portion desired by the user can be satisfied.

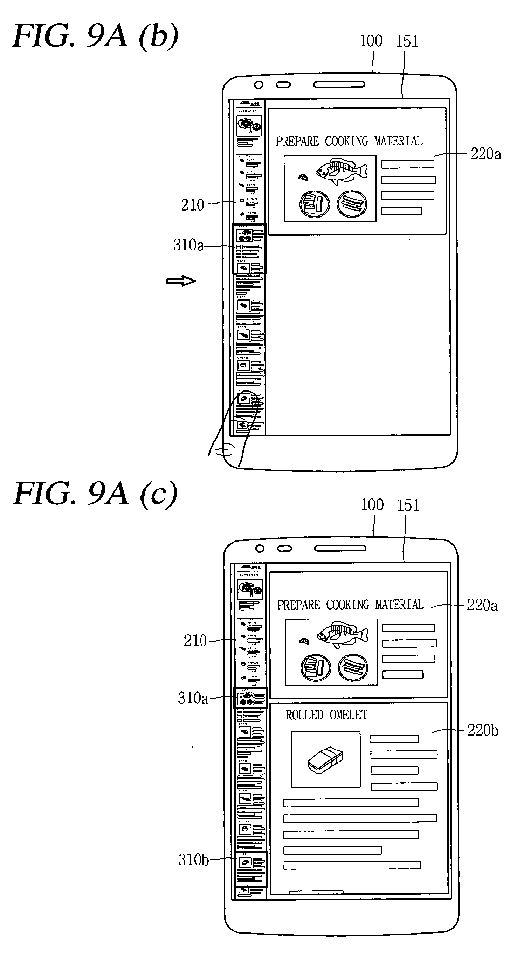

Hereinafter, a method for generating a new image by using first and second images according to an embodiment of the present disclosure will be described in detail with reference to the accompanying drawings. FIGS. 9A, 9B, and 9C are conceptual views illustrating a method for generating a new image by using a second image magnifying a portion corresponding to one region of the first image and a third image magnifying a portion corresponding to a region different from the one region.

Based on various types of touches applied to the second image 220a, the controller 180 can make at least a portion of the second image 220a disappear. For example, as illustrated in (a) of FIG. 9A, when a drag touch extending from a touch applied to one side of the second image 220a and released from the other side opposite to the one side is applied, the controller 180 can limit outputting of at least a portion of the second image based on the drag touch. Here, a size of the indicator 400 output on the first image 210 may be changed based on the limitation in the outputting of at least a portion of the second image.

The controller 180 can determine a portion to disappear in the second image 220 according to a user selection. For example, as illustrated in (b) of FIG. 9A, when a drag touch is applied to the second image 220a, the controller 180 can make an image corresponding to a lower side with respect to the portion to which the drag touch has been applied, disappear.

In another example, when the drag touch is applied to the second image 220a, the controller 180 can output notification information for selecting an image to be limited in output thereof among the image corresponding to the upper side and the image corresponding to the lower side with respect to the portion to which the drag touch has been applied. Thereafter, the controller 180 can limit outputting of an image selected by the user among the image corresponding to the upper side and the image corresponding to the lower side.

Thereafter, as illustrated in (b) of FIG. 9A, when outputting of at least a portion of the second image is limited when a touch is applied to the region 310b different from the one region 310a of the first image 210, the controller 180 can output a third image 220b magnifying the portion corresponding to the different region 310b as shown in (c) of FIG. 9A. The third image 220b may be output when outputting of the first and second images 210 and 220a is maintained.

Thereafter, when the first image 210, the second image 220a, and the third image 220b are output as illustrated in (a) of FIG. 9B, when a preset type of touch is applied to at least one of the second image 220a and the third image 220b as illustrated in (b) of FIG. 9B, the controller 180 can generate a new image 230 including the second image 220a and the third image 220b.

The preset type of touch applied to at least one of the second and third images may be a pinch-in touch. In more detail, when the first touch is applied to the second image 220a and the second touch is applied to the third image 220b, when at least one drag touch extending from at least one of the first and second touches is applied to form a pinch-in touch, the controller 180 can generate a new image 230 by combining (or connecting or merging) the second image 220a and the third image 220b as illustrated in (c) of FIG. 9B.

In addition, based on a drag touch applied from the second image 220a to the third image 220b or a drag touch applied from the third image 220b to the second image 220a, the controller 180 can generate the new image 230. Meanwhile, by using the second image 220a and the third image 220b, the controller 180 can increase at least one of the one region 310a and the different region 310b of the first image 210 and combine the one region 310a and the different region 310b having an increased size to generate the new image 230.

For example, as illustrated in (a) of FIG. 9C, when a preset type of touch (for example, a long touch) is applied to the third image 220b, the controller 180 can set the different region 310b of the first image 210a to a combining target region 640. Thereafter, when a drag touch is applied to the third image 220b, the controller 180 can expand the combining target region 640 as illustrated in (b) and (c) of FIG. 9C. Based on a drag touch applied to the third image 220b, the controller 180 can change the third image 220b to a different image 220c. The different image 220c may be an image magnifying a portion corresponding to the region 310c different from the region 310b.

Thereafter, the controller 180 can combine the one region 310a of the first image and the image corresponding to the combining target region 640 to generate a new image 230. In more detail, based on a preset type of touch applied to the second image 220a and the different image 220c, the controller 180 can combine the second image 220a and the image corresponding to the combining target region 640.

In addition, based on a preset type of touch (for example, a long touch) applied to the second image 220a, the controller 180 can set the one region 310a as a combining target region. Also, when the combining target region is set in the one region 310a, when a drag touch is applied to the second image 220a, the controller 180 can increase or reduce the size of the combining target region.

Here, for the preset type of touch to generate a new image, the preset type of touch described above with reference to FIG. 9B may be applied in the same or similar manner. Also, the method for setting the capture target region 600 described above with reference to FIGS. 4A through 4C may be inferred and applied in the same or similar manner to the method for setting the combining target region 640.

As described above, in an embodiment of the present disclosure, a new image may be generated by using a second image magnifying a portion corresponding to one region of a first image and a third image magnifying a portion corresponding to a different region. Thus, the present disclosure can provide an optimized editing function with respect to an image having a ratio different from the ratio between the length and the width of the display unit.

Meanwhile, in an embodiment of the present disclosure, a function to transmit (share) an image stored in the memory can be provided. Hereinafter, a method for transmitting a first image having a ratio different from the ratio between the length and the width of the display unit will be described in detail with reference to the accompanying drawings.

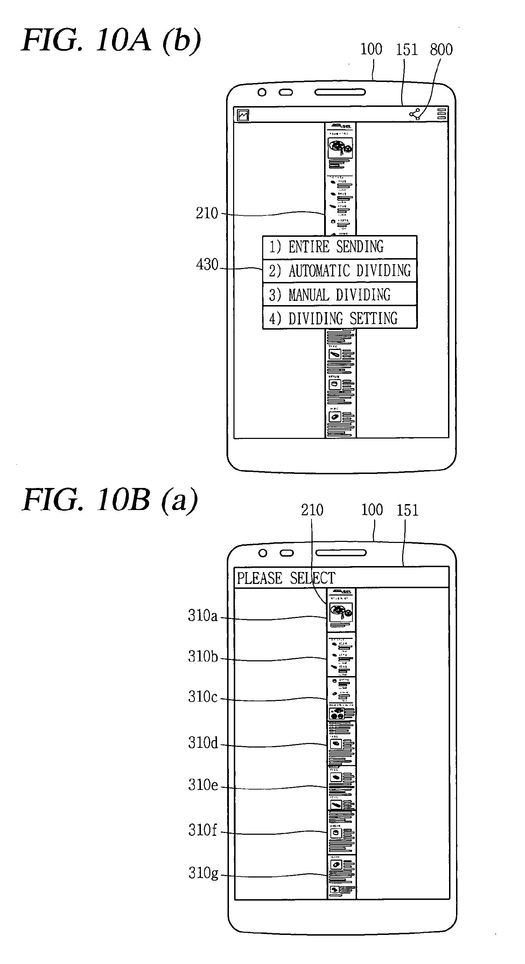

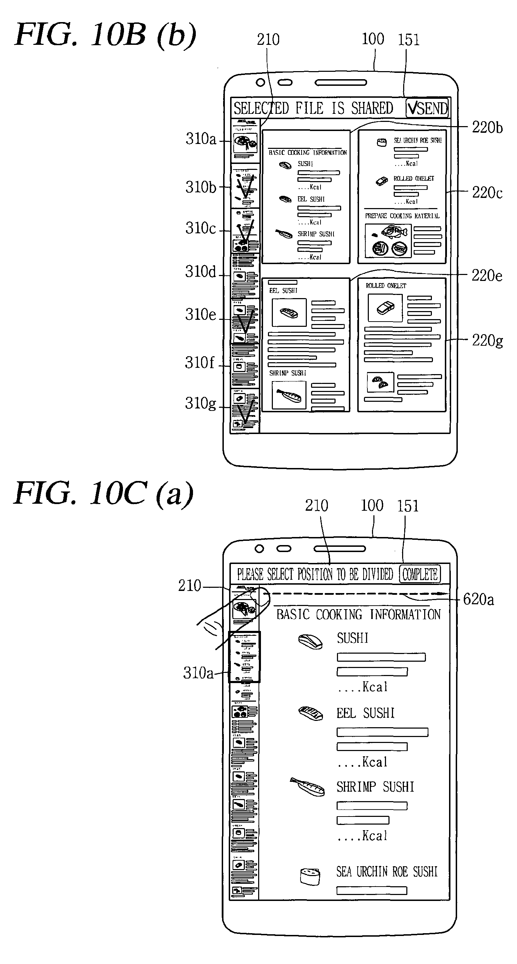

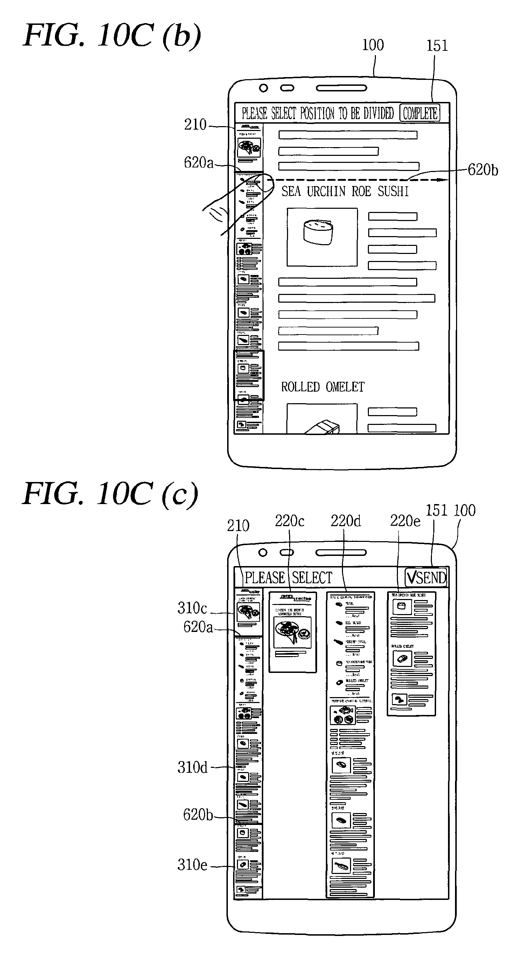

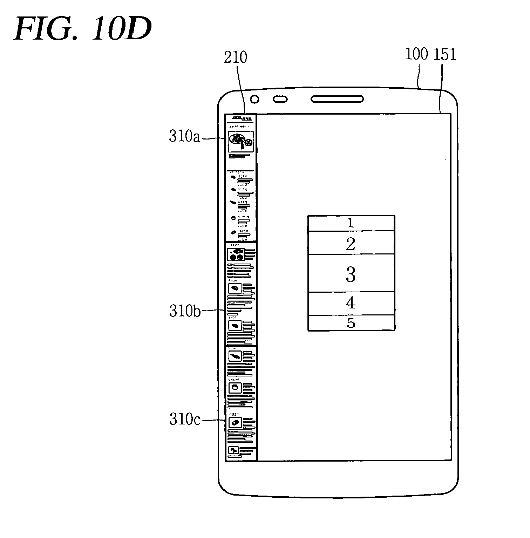

FIGS. 10A, 10B, 10C, and 10D are conceptual views illustrating a method for transmitting a first image. As illustrated in (a) of FIG. 10A, an icon 800 for transmitting a first image 210 may be output on the display unit 151. When the icon 800 is selected, the controller 180 can output a menu 530 for selecting a method for transmitting the first image 210 as illustrated in (b) of FIG. 10A. When "entire transmission" associated with a function of transmitting the entirety of an image is selected from among the menu 430, the controller 180 can transmit (share) the first image 210 itself to (with) at least one of a different terminal and a server.

Meanwhile, when "automatic dividing" associated with a function of automatically dividing the first image is selected from the menu 430, the controller 180 can divide (split) the first image 210 into at least one region according to preset conditions. The preset conditions may be conditions for dividing the first image 210 with respect to at least one of an image, text, and sentence included in the first image or dividing the first image 210 to regions having the same size.

For example, when "automatic dividing" is selected from the menu 430, the controller 180 can divide the first image 210 into at least one region 310a to 310g as illustrated in (a) of FIG. 10B. Thereafter, at least one of the at least one region is selected, the controller 180 can output images 220b, 220c, 220e, and 220g magnifying selected regions 310b, 310c, 310e, and 310g among the at least one region 310a to 310g, on the display unit 151 as shown in (b) of FIG. 10B.

Meanwhile, when "manual dividing" associated with a function to divide the first image based on a user request is selected, the controller 180 can divide the first image 210 into at least two regions based on a preset type of touch applied to the second image 220a magnifying one region of the first image 210. For example, as illustrated in (a) of FIG. 10C, when a drag touch 620a extending from one side of the second image and released from the other side of the second image is applied to the second image magnifying the portion corresponding to one region 310a of the first image 210, the controller 180 can divide the first image 210 into at least two images with respect to the drag touch 620a.

Also, as illustrated in (b) of FIG. 10C, when a drag touch 620b extending from one side of a third image and released from the other side of the third image is applied to the third image magnifying a portion corresponding to the region 310b different from the one region 310a, the controller 180 can divide the first image 210 with respect to the drag touch 620b.

When the drag touch 620a or 620b is applied, the controller 180 can divide the first image 210 into at least two regions 310c, 310d, and 310e with respect to the drag touch. Also, as illustrated in (c) of FIG. 10C, the controller 180 can output images 220c, 220d, and 220e magnifying the portions corresponding to the at least two regions 310c, 310d, and 310e on the display unit 151. Thereafter, when at least one of the first image divided into the at least two regions 310c, 310d, and 310e and the magnified images 220c, 220d, and 220e is selected, the controller 180 can transmit (share) the selected image to at least one of a different terminal and a server.

Meanwhile, when "dividing setting" associated with a function to divide the first image is selected from the menu 430, the controller 180 can output a graphic object for selecting the number of regions when dividing the first image as illustrated in FIG. 10D. For example, as illustrated in FIG. 10D, when "3" is selected through the graphic object, the controller 180 can divide the first image 210 into three regions 310a, 310b, and 310c according to preset conditions. As for the preset conditions, the preset conditions as a reference for the automatic dividing described above with reference to FIG. 10B may be inferred and applied in the same or similar manner.

Through the configuration described above, in an embodiment of the present disclosure, the user convenience in which, before a first image is transmitted, an editing mode is entered and the first image is edited and transmitted can be resolved.

As described above, according to embodiments of the present disclosure, a page exceeding an output region of the display unit may be captured to include a portion which is output on the display unit and a portion which is not output at a time. Thus, when the user captures the page exceeding the output region of the display unit, the user may capture his or her desired portion among the output portion and non-output portion at a time without having to perform capturing a plurality of times, and thus, user convenience can be enhanced.

Also, according to embodiments of the present disclosure, a first image and a second image magnifying a portion corresponding to a region of the first image can be displayed together. Also, according to embodiments of the present disclosure, user's need to output a second image magnifying a desired portion of the first image, while maintaining the first image, can be satisfied. Also, the user can easily recognize which portion of the first image, the second image is magnifying.

Also, according to embodiments of the present disclosure, in a case in which a first image is intended to be edited, at least one second image magnifying a portion corresponding to at least one region of the first image is output, and the first image may be edited by using the at least one second image. Accordingly, since the first image is edited by using the second image magnifying the portion corresponding to one region of the first image, the user can accurately and conveniently edit the first image.

The present invention described above may be implemented as a computer-readable code in a medium in which a program is recorded. The computer-readable medium includes any type of recording device in which data that can be read by a computer system is stored. The computer-readable medium may be, for example, a hard disk drive (HDD), a solid state disk (SSD), a silicon disk drive (SDD), a ROM, a RAM, a CD-ROM, a magnetic tape, a floppy disk, an optical data storage device, and the like. The computer-readable medium also includes implementations in the form of carrier waves (e.g., transmission via the Internet). Also, the computer may include the controller 180 of the terminal. Thus, the foregoing detailed description should not be interpreted limitedly in every aspect and should be considered to be illustrative. The scope of the present invention should be determined by reasonable interpretations of the attached claims and every modification within the equivalent range are included in the scope of the present invention.

The foregoing embodiments and advantages are merely and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the embodiments described herein may be combined in various ways to obtain additional and/or alternative embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a touch screen (151) configured to display a first image; and
a controller (180) configured to:
display a second image magnifying a portion corresponding to a touch-selected region of the first image while continuing to display the first image.

2. The mobile terminal of claim 1, wherein the controller (180) is further configured to:
display the first image on a partial region of the touch screen (151), and
display the second image to a remaining region excluding the partial region on the touch screen (151).

3. The mobile terminal of claim 2, wherein the controller (180) is further configured to move the first image to increase the remaining region in which the second image is displayed.

4. The mobile terminal any one of claims 1 to 3, wherein the controller (180) is further configured to display an indicator indicating the touch-selected region.

5. The mobile terminal of claim 4, wherein the controller (180) is further configured to change the second image to a third image magnifying a portion of the first image corresponding to a region different from the touch-selected region in response to a drag touch applied to the second image, wherein the controller (180) is further configured to move the indicator to correspond to the different region of the first image.

6. The mobile terminal any one of claims 4 and 5, wherein the controller (180) is further configured to:
change a size of the touch-selected region based on a preset type of touch applied to the second image,
display the indicator to correspond to the changed region, and
change the second image to an image magnifying a portion of the first image corresponding to the changed region.

7. The mobile terminal any one of claims 1 to 6, wherein the controller (180) is further configured to display the first and second images in an overlapping manner.

8. The mobile terminal of claim 7, wherein the controller (180) is further configured to adjust a transparency of at least one of the first and second images such that the at least one of the first and second images is recognizable in a portion in which the first and second images overlap with each other.

9. The mobile terminal of claim 8, wherein the controller (180) is further configured to, in response to a touch applied to any one of the first and second images:
display an image corresponding to the overlapping portion in the image to which the touch has been applied in the overlapping portion, and
limit a display of an image corresponding to the overlapping portion in the image other than the image to which the touch has been applied.

10. The mobile terminal any one of claims 1 to 9, wherein the controller (180) is further configured to change an output form of the first image such that at least a portion of the first image is limited based on at least two drag touches applied at different times.

11. The mobile terminal of claim 10, wherein the controller (180) is further configured to limit a display of an image between the portions to which the first and second drag touches have been applied, among the first images, in response to a first drag touch applied to the second image and a second drag touch different from the first drag touch applied to a portion different from a portion to which the first drag touch has been applied.

12. The mobile terminal any one of claims 10 and 11, wherein the controller (180) is further configured to:
display an icon indicating an image limited in output thereof exists in the first image having the changed output form, and
display the limited image based on a touch applied to the icon.

13. The mobile terminal any one of claims 10 to 12, wherein, among first and second drag touches applied in mutually perpendicular directions, when the second drag touch is applied to the second image after the first drag touch is applied to the second image, the controller (180) is further configured to limit displaying of at least a portion of the first image.

14. The mobile terminal any one of claims 1 to 13, wherein when a drag touch extending from a touch applied to one side of the second image and released from the other side opposite to the one side is applied, the controller (180) is further configured to limit displaying at least a portion of the second image based on the drag touch, and
when displaying the at least portion of the second image is limited, and when a touch is applied to a region different from the one region of the first image, the controller (180) is further configured to display a third image magnifying a portion corresponding to the different region.

15. The mobile terminal of claim 14, wherein, when a first touch is applied to the second image and a second touch is applied to the third image, and when at least one drag touch extending from at least one of the first and second touches is applied to form a pinch-in touch, the controller (180) is further configured to create a new image including the second and third images.
